(19) **Europäisches Patentamt / European Patent Office / Office européen des brevets**

(11) **EP 4 571 345 A1**

(12) # EUROPEAN PATENT APPLICATION

(43) Date of publication:
**18.06.2025 Bulletin 2025/25**

(21) Application number: **24217985.1**

(22) Date of filing: **06.12.2024**

(51) International Patent Classification (IPC):
**G01S 1/68** (2006.01)  **G01S 5/02** (2010.01)
**G01S 13/76** (2006.01)  **G06K 7/10** (2006.01)
**G06Q 10/0833** (2023.01)

(52) Cooperative Patent Classification (CPC):
**G01S 5/0295; G01S 1/68; G01S 5/0244;**
**G01S 5/0249; G01S 13/765; G06Q 10/0833;**
G06K 7/10425

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.12.2023 JP 2023212326**

(71) Applicant: **CANON KABUSHIKI KAISHA**
**Tokyo 146-8501 (JP)**

(72) Inventors:
• **ARAKI, Go**
**Tokyo, 146-8501 (JP)**
• **TAKASE, Junna**
**Tokyo, 146-8501 (JP)**

(74) Representative: **TBK**
**Bavariaring 4-6**
**80336 München (DE)**

(54) **POSITION MANAGEMENT SYSTEM, METHOD AND INFORMATION PROCESSING APPARATUS**

(57) A position management system (1) for managing a position of a management target that is movable in a real space includes a reading apparatus (110) capable of reading identification information from a wireless device, a first wireless device (40) that stores first identification information, and a second wireless device (50) attached to the management target and stores second identification information for identifying the management target. The first wireless device is installed within a reading range of the reading apparatus. When the second identification information is read from the second wireless device, the system estimates a position of the management target based on a result of reading the second identification information, and detects an abnormality related to the first wireless device based on a result of an attempt by the reading apparatus to read the first identification information from the first wireless device.

FIG. 6

EP 4 571 345 A1

**Description**

BACKGROUND OF THE INVENTION

Field of the Invention

The present disclosure relates to a position management system, a method, and an information processing apparatus.

Description of the Related Art

Radio frequency identification (RFID) is a technology that allows information embedded in a small device which is also referred to as a tag to be read by an external reader through a short-range wireless communication. For example, an RFID tag in which unique identification information is embedded is attached to an item so that a location of the item can be efficiently recognized and that visualization of information on managed items can be facilitated. Among others, a passive type RFID tag, which transmits information utilizing energy of electromagnetic waves emitted from a reader, does not require a battery and thus is low-cost in manufacturing, and can operate semi-permanently. Hence, it has become widely-used in various scenes.

Japanese Patent Laid-Open No. 2020-129312 discloses a management system which makes use of RFID for making progress management of construction work efficient. In the management system of Japanese Patent Laid-Open No. 2020-129312, RFID tags are installed at specific places and also attached to building materials. In such a situation, latest locations and statuses of the building materials are presented to a user based on information read from the RFID tags by a handy terminal.

Japanese Patent Laid-Open No. 2021-141415 discloses a system that combines information reading from RFID tags with a self-localization technique in order to estimate a position of a management target without relying on global positioning system (GPS) positioning which is likely to become unstable in an environment with a lot of blocking objects. The system of Japanese Patent Laid-Open No. 2021-141415 estimates a location of a management target based on a known position of a position tag installed in a fixed manner and an amount of relative movement of a reading apparatus calculated in accordance with the self-localization (also referred to as pedestrian dead reckoning (PDR)).

SUMMARY OF THE INVENTION

In the system of Japanese Patent Laid-Open No. 2020-129312 and Japanese Patent Laid-Open No. 2021-141415, the tag reader detects no RFID tag unless there exists an RFID tag in the vicinity of the tag reader. However, the reason why no RFID tag is detected is not necessarily because there exists no RFID tag. For example, if an RFID tag is damaged or has been removed for some reason, or if the tag reader is not operating properly, an RFID tag will be undetectable. If the abnormality of a system that may occur due to various such causes is not appropriately distinguished from normal non-detection due to absence of an RFID tag, reliability of position information will decrease.

In light of the foregoing, the present invention aims to prevent the reliability of position information from decreasing by making it easier to detect an abnormality in a system that relies on reading information from wireless devices to estimate positions of management targets.

The present invention in its first aspect provides a position management system as specified in claims 1 to 14.

The present invention in its second aspect provides a method performed in a position management system as specified in claim 15.

The present invention in its third aspect provides an information processing apparatus as specified in claim 16.

Further features of the present invention will become apparent from the following description of exemplary embodiments (with reference to the attached drawings).

BRIEF DESCRIPTION OF THE DRAWINGS

FIG. 1A is a schematic view illustrating an example of a configuration of a position management system according to an embodiment;

FIG. 1B is a schematic view illustrating another example of a configuration of a position management system according to an embodiment;

FIG. 2 is a block diagram illustrating an example of a configuration of a tag reader according to an embodiment;

FIG. 3 is a block diagram illustrating an example of a configuration of a user terminal according to an embodiment;

FIG. 4 is a block diagram illustrating an example of a configuration of a management server according to an embodiment;

FIG. 5 is an explanatory diagram illustrating examples of a plurality of coordinate regions;

FIG. 6 is an explanatory diagram illustrating a first example of a configuration of an information browsing screen;

FIG. 7 is an explanatory diagram illustrating a second example of a configuration of an information browsing screen;

FIG. 8 is an explanatory diagram illustrating an example of a configuration of a tag monitoring table according to an embodiment;

FIG. 9 is an explanatory diagram illustrating an example of a configuration of a reader monitoring table according to an embodiment;

FIG. 10 is an explanatory diagram illustrating an example of notification of abnormality occurrence on an information browsing screen;

FIG. 11A is a flowchart illustrating a first example of a flow of data transmission processing according to an embodiment;

FIG. 11B is a flowchart illustrating a second example of a flow of data transmission processing according to an embodiment;

FIG. 12 is a flowchart illustrating an example of a flow of position estimation processing according to an embodiment;

FIG. 13 is a flowchart illustrating an example of a flow of display control processing according to an embodiment;

FIG. 14 is a flowchart illustrating an example of a flow of reader monitoring processing according to an embodiment;

FIG. 15 is a flowchart illustrating an example of a flow of tag monitoring processing according to an embodiment;

FIG. 16 is a schematic view illustrating an example of a configuration of a position management system according to a first modification example; and

FIG. 17 is a flowchart illustrating an example of a flow of monitoring processing according to a second modification example.

## DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

<1. Overview of System>

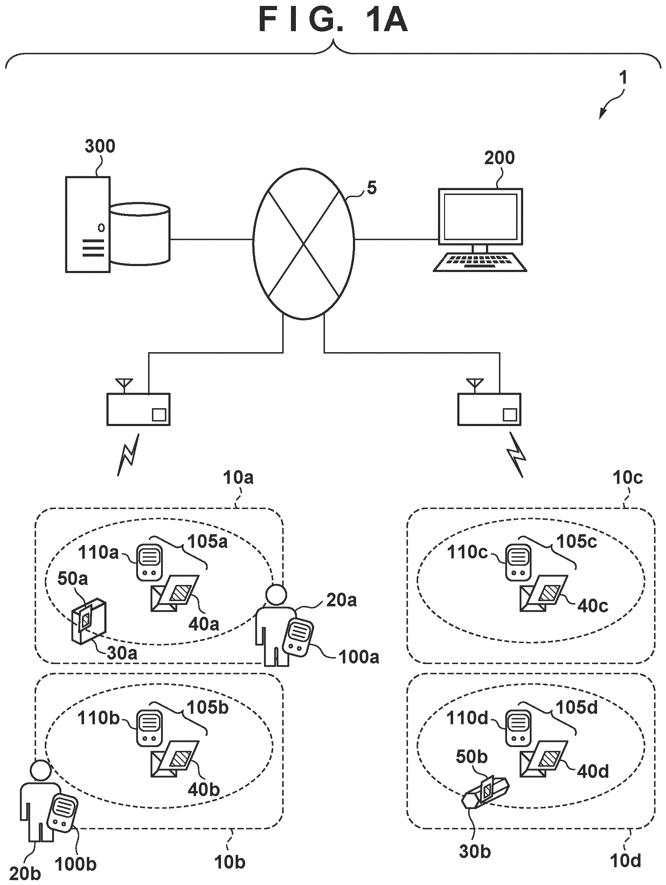

FIG. 1A is a schematic view illustrating an example of a configuration of a position management system 1 according to an embodiment. The position management system 1 is a system that tracks locations of management targets which may change day-to-day and manages positions of the management targets to facilitate visualization of position information. Management targets may include at least one of items that are located in the real space and users that act in the real space. An item may be a non-living object (for example, a machine, equipment, a tool, a material, a consumable good, a component, a household tool, a vehicle, or a robot) or living object (for example, an animal or a plant). In the following, an example of item management at an office is mainly described, however, the technology according to the present disclosure is also applicable to other types of management works such as setting up an event venue and managing materials at a construction site, for example.

In the present embodiment, it is assumed that a plurality of sections are set in the real space for the purpose of managing position information. The sections will be candidate locations of each management target. The position information of each management target further includes two-dimensional or three-dimensional positional coordinates of a point where each management target is estimated to be located.

In the example of FIG. 1A, a plurality of sections 10a, 10b, 10c and 10d are set in the real space. For example, when considering an office as one real space, each of the sections 10a to 10d may correspond to each floor or each room in the office. The sections may be set in a hierarchical manner such that one section includes another section though it is not illustrated in FIG. 1A.

There exists an item 30a in the section 10a. There exists an item 30b in the section 10d. These items are management targets in the position management system 1. The management targets 30a and 30b are movable in the real space.

The position management system 1 makes use of wireless devices, which are also referred to as tags, in order to track locations of the management targets. A position tag is a wireless devices (a first wireless devices) which is installed in each of the sections set in the real space. In the figure, there is a position tag 40a installed in the section 10a, a position tag 40b in the section 10b, a position tag 40c in the section 10c, and a position tag 40d in the section 10d. Note that two or more position tags may be installed in one section. Each position tag has specific identification information (first identification information) stored in an internal memory.

A target tag is a wireless devices (a second wireless devices) which is attached to each of the management targets in the position management system 1.

FIG. 1A shows a target tag 50a attached to the management target 30a, and a target tag 50b attached to the management target 30b. Each target tag has identification information (second identification information) stored in an internal memory for identifying the management target to which the target tag is attached.

A user 20a moves across the plurality of sections while carrying a tag reader 100a in daily works. A user 20b also moves across the plurality of sections while carrying a tag reader 100b. In this specification, the expression that a user carries a certain target broadly encompasses various modes in which the user moves together with the target (for example, moves in a state where he or she holds or wears the target, etc.).

Note that, in the following descriptions, the sections 10a to 10d are collectively referred to as sections 10 by omitting the trailing letters from the reference signs when they do not need to be distinguished from each other. The same applies to the users 20 (20a, 20b), the management targets 30 (management targets 30a, 30b), the position tags 40 (40a, 40b, ...), and the target tags 50 (target tags 50a, 50b), as well as other elements.

In the present embodiment, each of the tags such as the position tags 40 and the target tags 50 is assumed to be a passive-type RFID tag (a passive tag). A passive tag is composed of: a small integrated circuit (IC) chip with an embedded memory; and an antenna, and has specific identification information and some other information stored in the memory. In this specification, identification information is simply referred to as an ID, and identification information for identifying a tag is referred to as a tag ID. It should be noted that the tag ID may be considered as information for identifying an object to which the tag is attached. The IC chip of a passive tag operates by utilizing energy of an electromagnetic wave emitted from a tag reader, and modulates the information such as the tag ID and some other information stored in the memory into an information signal to transmit (send back) the information signal from the antenna.

It should be noted that, in another embodiment, each tag may be an active-type RFID tag. If each tag actively (for example, periodically) transmits information to its vicinity by utilizing power from a built-in battery, such a tag may be called a beacon tag. In a further embodiment, each tag may be a wireless device which sends back information in response to a signal from a reader in accordance with Near Field Communication (NFC) protocol or Bluetooth (registered trademark) protocol, for example. Each tag may have any name such as an IC tag, an IC card, or a responder.

The tag reader 100 is a reading apparatus that is capable of reading information stored in wireless devices such as RFID tags. For example, the tag reader 100 can detect a position tag 40 by reading a tag ID from the position tag 40. The tag reader 100 can detect a target tag 50 (and a corresponding management target 30) by reading a tag ID from the target tag 50. An example of a particular configuration of the tag reader 100 will be further described below.

The terminal apparatus 200 is an information processing apparatus that is utilized by the user 20 or another management user. The terminal apparatus 200 may be a general-purpose computer such as a personal computer (PC) or a smartphone, or may be a dedicated terminal apparatus provided for management and browsing of position information. An example of a particular configuration of the terminal apparatus 200 will be further described below.

The management server 300 is an information processing apparatus that maintains position information of the management targets 30 and other information in a database. The management server 300 may be implemented as an application server, a database server, or a cloud server using, for example, a high-performance general-purpose computer. The management server 300 receives tag reading results from tag readers 100, and updates the position information in the database based on the received tag reading results. An example of a particular configuration of the management server 300 will be further described below.

As described above, the position management system 1 relies on reading information from the wireless devices by the tag readers to estimate positions of the management targets. For example, if the tag reader 100a reads respective tag IDs from the target tag 50a and the position tag 40a, it may estimate that the managed target 30a is located in the section 10a based on the tag reading results. On the other hand, if a tag reader does not detect any tag, it may be generally determined that there exists no tag (and no management target) in the vicinity of the tag reader. However, the reason why no tag is detected may be that a tag is damaged or has been removed for some reason, or that the tag reader is not operating properly.

In order to appropriately distinguish the abnormality of the system that may occur for the above-described various causes from normal operations, a tag reader 110 is introduced in the position management system 1. In FIG. 1A, there is a tag reader 110a installed in the section 10a, a tag reader 110b installed in the section 10b, a tag reader 110c installed in the section 10c, and a tag reader 110d installed in the section 10d. The tag reader 110 is also a reading apparatus that is capable of reading information stored in wireless devices such as RFID tags. The tag readers 110 are installed in a fixed manner at respective points whereas the tag readers 100 are movable by being carried by the users 20. As such, in the following descriptions, the tag readers 100 are referred to as mobile readers, and the tag readers 110 are referred to as fixed readers.

Each fixed reader 110 constitutes a pair with a corresponding position tag 40. In the example of FIG. 1A, the pair of the position tag 40a and the fixed reader 110a forms a reading system 105a. The pair of the position tag 40b and the fixed reader 110b forms a reading system 105b, the pair of the position tag 40c and the fixed reader 110c forms a reading system 105c, and the pair of the position tag 40d and the fixed reader 110d forms a reading system 105d. In each of the reading systems 105, at least one of the fixed reader 110 and the position tag 40 is installed at a known point in the real space. In addition, the position tag 40 is installed within a reading range of the fixed reader 110. In the figure, the reading ranges of the fixed readers 110 are indicated by dotted line ovals. As described below in detail, by introducing the fixed readers 110 of which reading ranges always include respective position tags 40 in such a manner, it will be easier to break down a cause of an abnormality that may occur in the position management system 1.

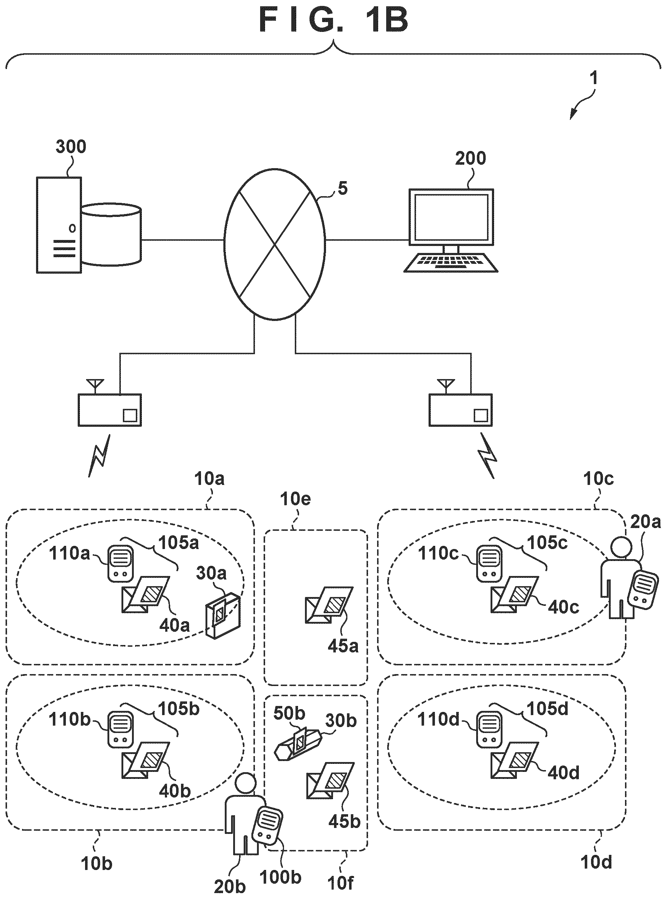

It should be noted that all of the position tags is not necessarily paired with a fixed reader in the position management system 1. FIG. 1B illustrates another example of a configuration of the position management system 1. In the example of FIG. 1B, the position management system 1 includes position tags 45a and 45b in addition to the constituent elements illustrated in FIG. 1A. The position tag 45a is installed in the section 10e. The position tag 45b is installed in the section 10f. These position tags 45a are wireless device (third wireless devices) installed at known positions in the real space and storing specific identification information (third identification information). For example, if the mobile reader 100b reads respective tag IDs from the target tag 50b and the position tag 45b, the management server 300 may estimate that the management target 30b is located in the section 10f based on the tag reading results. In the following descriptions, a position tag 40 that is paired with a fixed reader is also referred to as a paired position tag, and a position tag 45 that is not paired with a fixed reader is also referred to as a non-paired position tag. The non-paired position tags are typically installed outside reading ranges of fixed readers.

The mobile readers 100, the fixed readers 110, the terminal apparatus 200 and the management server 300 are connected to a network 5. The network 5 may be a wired network, a wireless network, or any combination thereof. Examples of the network 5 may include the Internet, an intranet, and a cloud network. The tag readers 100 and 110 may be capable of communicating with the management server 300 directly or indirectly via a certain relay apparatus (not illustrated). For example, a user 20 may carry a user terminal together with a mobile reader 100, and the user terminal may relay communication between the mobile reader 100 and the management server 300. Moreover, a relay apparatus that relays communication between the fixed reader 110 and the management server 300 may be installed in the real space. A single relay apparatus may provide a function to relay communication to a plurality of fixed readers 110.

Though a single management server 300 is illustrated in FIGS. 1A and 1B, the functions of the management server 300, which will be described in detail below, may be provided by a single apparatus or by physically-separate multiple apparatuses which operate in conjunction with each other. In addition, though an example where the management server 300 maintains a database will be described in the present embodiment, an apparatus other than the management server 300 may maintain a part or all of the database. For example, a part of data may be maintained by a wireless device (for example, a position tag or a target tag), a tag reader or a terminal apparatus.

Note that the number of sections set in a real space, and the number of management targets managed by the position management system 1 are not limited to the examples illustrated in FIGS. 1A and 1B but may be any numbers. Likewise, the number of users 20 and the number of tag readers 100, 110 are also may be any numbers.

<2. Configuration Example of Tag Reader>

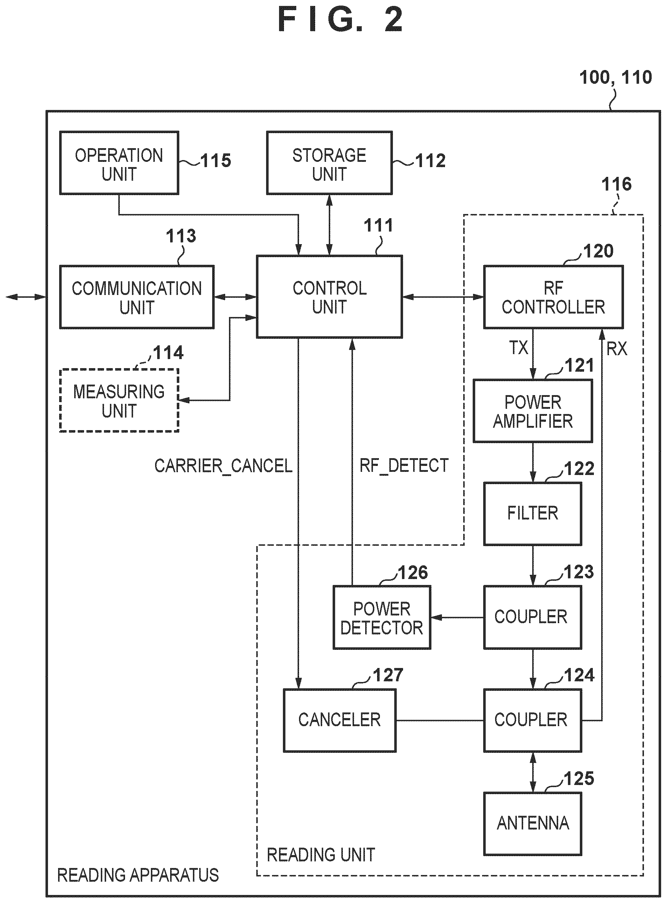

FIG. 2 is a block diagram illustrating an example of a configuration of the tag reader (the mobile reader 100 and the fixed reader 110) according to an embodiment. With reference to FIG. 2, the tag reader comprises a control unit 111, a storage unit 112, a communication unit 113, an operation unit 115, and a reading unit 116. In an embodiment example, the mobile reader 100 may further comprise a measuring unit 114.

The control unit 111 consists of a memory to store computer programs, and one or more processors (for example, central processing units (CPUs)) to execute the computer programs. The control unit 111 controls overall functionality of the tag reader described in this specification. For example, the control unit 111 causes the reading unit 116 to perform reading from an RFID tag within a tag reading range, and causes the storage unit 112 to temporarily store the read information, the time of the reading and the received signal level as reading result data. Then, the control unit 111 transmits, to the management server 300 via the communication unit 113, the reading result data stored in the storage unit 112 together with the reader identification information (also referred to as a reader ID) of the tag reader. In the embodiment example in which the mobile reader 100 includes the measuring unit 114, in parallel to the reading from RFID tags, the control unit 111 causes the measuring unit 114 to measure the position of the tag reader, and cause the storage unit 112 to store the measurement result. Then, the control unit 111 transmits, to the management server 300 via the communication unit 113, the measurement result data stored in the storage unit 112 together with the reader ID of the tag reader.

The storage unit 112 may include any kind of storage medium such as a semiconductor memory (a read only memory (ROM), a random access memory (RAM) or the like), an optical disk, or a magnetic disk, for example. In the present embodiment, the storage unit 112 stores the data to be transmitted to the management server 300, and the reader ID of the tag reader.

The communication unit 113 is a communication interface for the tag reader to communicate with other apparatuses. For example, the communication unit 113 may be a wireless local area network (WLAN) interface that communicates with a WLAN access point, or a cellular communication interface that communicates with a cellular base station. Alternatively, the communication unit 113 may be a connection interface (e.g. a Bluetooth (registered trademark) interface or a universal serial bus (USB) interface) for connection with a relay apparatus.

The measuring unit 114 is a unit that is capable of measuring a position of the tag reader. For example, the measuring unit 114 can measure a relative amount of movement of the tag reader from a certain reference position using the self-localization technique, also referred to as PDR. In a case where the measuring unit 114 measures the relative amount of movement using PDR, the measuring unit 114 includes a three-axis acceleration sensor, a gyro sensor, and a geomagnetic sensor. The measuring unit 114 may measure the relative amount of movement using any publicly-known self-localization technique and the technique will not be described in detail here. In an alteration example, the measuring unit 114 may further include an air pressure sensor used for estimating a relative height from a reference position. The measuring unit 114 continuously measures the relative amount of movement of the mobile reader 100, and outputs a result of the measurement to the control unit 111. The relative amount of movement may be indicated by a two-dimensional vector in a horizontal plane or a three-dimensional vector that includes a component of height direction as well.

As described below, the positional coordinates of the point at which each of the paired position tags 40 (or the fixed readers 110) and the non-paired position tags 45 are known in advance and registered in the database. Therefore, positional coordinates of a point at which a mobile reader 100 is currently positioned can be estimated based on a relative amount of movement of the mobile reader 100 from a time point where it detected a position tag to the current time point, and the known positional coordinates of that position tag 40.

A mobile readers 100 may not include the measuring unit 114. In that case, as described below, simple position estimation may be performed based only on tag reading results without taking the relative amount of movement of the mobile reader 100 into consideration.

The operation unit 115 receives an operation by the user 20. The operation unit 115 includes physical input devices such as a button, a switch, or a lever disposed on a housing of the tag reader, for example. The operation unit 115 receives an operation by the user 20 through an input device, and outputs an operation signal to the control unit 111. In addition, the operation unit 115 may include an audio input interface such as a microphone.

The reading unit 116 is a unit that is capable of reading, from each of the position tags and the target tags under management of the position management system 1, information stored in the tag. With reference to FIG. 2, the reading unit 116 includes an RF controller 120, a power amplifier 121, a filter 122, a first coupler 123, a second coupler 124, an antenna 125, a power detector 126, and a canceler 127. The RF controller 120 outputs a transmission signal (for example, a signal modulated in the UHF band) from a TX terminal to the power amplifier 121 in accordance with control by the control unit 111. The power amplifier 121 amplifies the transmission signal input from the RF controller 120 to output it to the filter 122. The filter 122 may be a low-pass filter, for example, and filters out unnecessary frequency components from the transmission signal amplified by the power amplifier 121. The first coupler 123 distributes the transmission signal that has passed the filter 122 to the second coupler 124 and the power detector 126. The second coupler 124 outputs the transmission signal input from the first coupler 123 to the antenna 125, and outputs a received signal input from the antenna 125 to the RF controller 120. The antenna 125 transmits the transmission signal input from the second coupler 124 to the air as an electromagnetic wave. Further, the antenna 125 receives a signal that has been sent back from an RFID tag that exists within the reading range of the tag reader in response to the transmission signal, and outputs the received signal to the second coupler 124. The power detector 126 detects a power level of the signal input from the first coupler 123, and outputs a signal 'RF_DETECT' indicative of the detected power level to the control unit 111. The canceler 127 receives a signal 'CARRIER CANCEL' indicative of a power level of a carrier from the control unit 111. Then, the canceler 127 extracts an intended signal component of the received signal to be output to an RX terminal of the RF controller 120 by canceling the carrier component of the transmission signal based on the CARRIER_CANCEL. The RF controller 120 demodulates the signal input from the RX terminal to obtain a tag ID and other information sent back from the RFID tag, and outputs the obtained information to the control unit 111. The RF controller 120 also measures a reception level (also referred to as received strength) of the signal input from the RX terminal, and outputs the measurement result to the control unit 111.

In the present embodiment, the reading unit 116 can attempt tag reading periodically (for example, once per second) without requiring any explicit command from a user. Data transmission from the communication unit 113 to the management server 300 can also be performed periodically (for example, every few seconds) without requiring any explicit command from a user. If no RFID tag is detected as a result of attempting tag reading, the control unit 111 transmits communication data indicating that no tag has been detected to the management server 300 via the communication unit 113 at a timing of communication that comes periodically. It should be noted that, in a case where the communication unit 113 performs communication with the management server 300 indirectly via a relay apparatus, the data transmission to the management server 300 may be performed only while there is an effective connection between the communication unit 113 and the relay apparatus.

<3. Configuration Example of Terminal Apparatus>

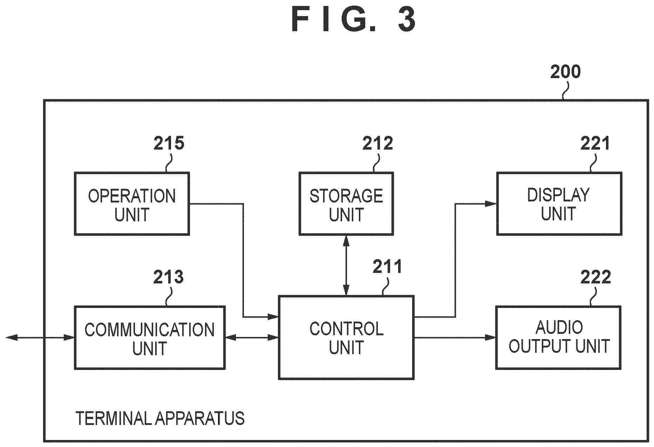

FIG. 3 is a block diagram illustrating an example of a configuration of the terminal apparatus 200 according to an embodiment. With reference to FIG. 3, the terminal apparatus 200 includes a control unit 211, a storage unit 212, a communication unit 213, an operation unit 215, a display unit 221 and an audio outputting unit 222.

The control unit 211 consists of a memory to store computer programs, and one or more processors to execute the computer programs. The processor may be a CPU, or an integrated circuit (IC) such as a microcontroller (for example, one-chip microcontroller). The control unit 211 controls overall functionality of the terminal apparatus 200 described in this specification. For example, when a user desires to browse position information of a management target in the position management system 1, the control unit 211 causes the display unit 221 to display a screen that presents the position information. Some examples of screens displayed to users will further be described below.

The storage unit 212 may include any kind of storage medium such as a semiconductor memory (ROM, RAM, or the like), an optical disk, or a magnetic disk, for example. In the present embodiment, the storage unit 212 temporarily store map image and position information of management targets received from the management server 300 described below for the purpose of screen display, for example.

The communication unit 213 is a communication interface for the terminal apparatus 200 to communicate with the management server 300. For example, the communication unit 213 may be a WLAN interface or a cellular communication interface. The terminal apparatus 200 may further comprise a connection interface (e.g. a Bluetooth (registered trademark) interface or a USB interface) for connection with peripheral equipment though it is not illustrated in FIG. 3.

The operation unit 215 receives operations and information inputs by a user. The operation unit 215 includes input devices such as a touch sensor, a key pad, a keyboard, a button, or a pointing device, for example. The operation unit 215 receives an operation by a user through an input device, and outputs an operation signal to the control unit 211. In addition, the operation unit 215 may further include some other types of input devices including an audio input interface such as a microphone, a sensor to detect a vibration, or the like.

The display unit 221 displays an image and information. The display unit 221 may be a liquid crystal display or an organic light emitting diode (OLED) display, for example. The audio outputting unit 222 outputs audio. The audio outputting unit 222 may be a speaker, for example.

It should be noted that a user terminal carried by a user 20 may have functions that are similar to those of the terminal apparatus 200 described here.

<4. Example of Configuration of Management Server>

<4-1. Schematic Configuration>

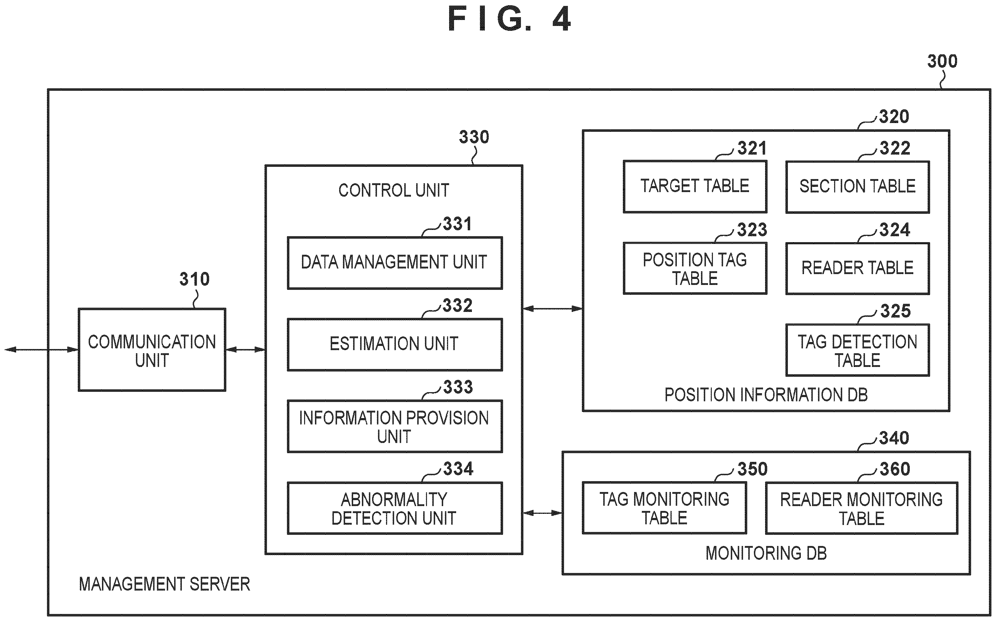

FIG. 4 is a block diagram illustrating an example of a configuration of the management server 300 according to an embodiment. With reference to FIG. 4, the management server 300 comprises a communication unit 310, a position information database (DB) 320, a control unit 330, and a monitoring DB 340.

The communication unit 310 is a communication interface for the management server 300 to communicate with other apparatuses. The communication unit 310 may be a wired communication interface or a wireless communication interface. In the present embodiment, the communication unit 310 communicates with the mobile readers 100, the fixed readers 110, and the terminal apparatus 200.

The position information DB 320 is a database that stores various data regarding management of positions of the management targets. In the present embodiment, the position information DB 320 includes a target table 321, a section table 322, a position tag table 323, a reader table 324, and a tag detection table 325.

The control unit 330 is a set of software modules that perform various processing related to position estimation and position information management. The individual software modules can run by one or more processors (not illustrated) of the management server 300 executing computer programs stored in a memory (not illustrated). In the present embodiment, the control unit 330 includes a data management unit 331, an estimation unit 332, an information provision unit 333, and an abnormality detection unit 334.

The monitoring DB 340 is a database that stores various data utilized for monitoring states of apparatuses and devices that constitute the position management system 1. In the present embodiment, the monitoring DB 340 includes a tag monitoring table 350 and a reader monitoring table 360.

<4-2. Basic Data Configuration and Registration>

The target table 321 may have one or more of the following data elements related to each of the management targets 30 under management of the position management system 1:

'Target ID'
'Tag ID'
'Name'
'Target Type'
'Located Section'
'Located Point'

'Target ID' is identification information that uniquely identifies each of the management targets 30. 'Tag ID' is identification information that uniquely identifies a target tag 50 attached to each management target. The value of 'Tag ID' is the same as the value of the tag ID stored within the corresponding target tag 50. 'Name' represents a name of each management target. 'Target Type' is type information that indicates a type into which each management target is classified (for example, "desk", "chair", "computer" or the like). 'Located Section' identifies a section in which each management target is estimated to be located among a plurality of sections by a value of 'Section ID' of the section table 322 described below. 'Located Point' represents positional coordinates of a point at which each management target is estimated to be positioned in an embodiment example where PDR is used for performing detailed position estimation.

The section table 322 may have one or more of the following data elements related to each of the sections 10 set in the real space:

' Section ID'
'Name'
'Geographical Information'
'Map Image'
' Scale'

'Section ID' is identification information that uniquely identifies each of the sections 10. 'Name' represents a name of each section. 'Geographical Information' is information that defines an area that each section occupies in the real space. For example, a rectangular area may be defined by coordinates of a vertex and lengths of respective sides, and a circular area may be defined by coordinates of the central point and a radius. 'Map Image' is a data element in which map image data is stored when the available map image data for each section is registered by a user. 'Scale' represents a ratio for converting a distance on a map image into a distance in the real space (for example, how many meters in the real space one pixel of the image corresponds to).

The position tag table 323 may have one or more of the following data elements related to each of the position tags 40 and 45 installed in the real space:

'Tag ID'
'Installation Section'
'Installation Point'
'Paired Reader'

'Tag ID' is identification information that uniquely identifies each of the position tags 40 and 45. The value of 'Tag ID' is the same as the value of the tag ID stored within the corresponding position tag. 'Installation Section' identifies the section in which each position tag is installed by a value of ' Section ID' of the section table 322. That is, the tag ID of each position tag is associated with an installation section corresponding to the position tag in the position tag table 323. 'Installation Point' represents the known positional coordinates of the point at which each position tag is installed. 'Paired Reader' identifies, for each of the paired position tags 40, the fixed reader 110 that is paired with the position tag by a value of 'Reader ID' of the reader table 324 described below. For the non-paired position tags 45, 'Paired Reader' may be blank.

The reader table 324 may have one or more of the following data elements related to each of the mobile readers 100 and the fixed readers 110 that are used in the position management system 1:

'Reader ID'
'Name'
'Reader Type'
'User'

'Reader ID' is identification information that uniquely identifies each of the mobile readers 100 and the fixed readers 110. 'Name' represents a name of each tag reader. 'Reader Type' is type information that indicates whether each tag reader is a mobile reader or a fixed reader. 'User' is identification information that identifies, for each of the mobile readers 100, a user 20 who carries the mobile reader. For the fixed readers 110, 'User' may be blank.

The data management unit 331 manages various data stored in the position information DB 320 as described above. The data registered in each table of the position information DB 320 may be generated by a user or an engineer, for example. The data management unit 331 may receive a data file in which such data is described via the communication unit 310 and register the data in each table. The map image data of each section may be data based on computer-aided design (CAD) drawings, for example. The data management unit 331 may provide the user with a user interface (UI) for accepting data registration, modification and deletion, for example, via the terminal apparatus 200.

<4-3. Estimation of Position>

The estimation unit 332 receives reading result data, via the communication unit 310, from the mobile readers 100 and the fixed readers 110, and estimates positions of respective management targets 30 based on the received reading result data.
As an example, assume that one management target 30 exists in the vicinity of a certain paired position tag 40. The fixed reader 110 corresponding to this paired position tag 40 reads the tag ID from the paired position tag 40 at a first point in time, and reads the tag ID from the target tag 50 attached to the management target 30 at a second point in time. The second point in time may be before or after the first point in time. When the reading result data indicates these results of tag reading, the estimation unit 332 estimate the position of the management target 30 at least based on known position information of the point at which the paired position tag 40 (or the corresponding fixed reader 110) is installed. Two embodiment examples of position estimation will be further described below. In a case where a user 20 who carries a mobile reader 100 approaches the same management target 30 and paired position tag 40, the estimation unit 332 can estimate the position of the management target 30 in a similar way based on tag reading results indicated by reading result data received from the mobile reader 100.
As another example, assume that one management target 30 exists in the vicinity of a certain non-paired position tag 45, and a user 20 who carries a mobile reader 100 approaches the management target 30 and non-paired position tag 45. The mobile reader 100 reads the tag ID from the non-paired position tag 45 at a first point in time, and reads the tag ID from the target tag 50 attached to the management target 30 at a second point in time. When the reading result data indicates these results of tag reading, the estimation unit 332 estimates the position of the management target 30 at least based on known position information of the point at which the non-paired position tag 45 is installed.
In a first embodiment example of position estimation, simple estimation without using a self-localization technique is performed. In the first embodiment example, the estimation unit 332 estimates that the detected management target 30 is positioned in the installation section associated with the tag ID of the reference position tag. In this case, the estimation unit 332 updates the value of 'Located Section' of the record of the detected management target 30 in the target table 321 to the section ID identifying the estimated section. The reference position tag herein may be a paired position tag 40 or a non-paired position tag 45. However, the reference position tag is selected provided that its detection time is temporally close to the detection time of the target tag 50 (for example, the time difference between the first point in time and the second point in time is smaller than a preset threshold (for example, some seconds)). In an example, the estimation unit 332 may consider that the detected management target 30 is positioned at the installation point associated with the tag ID of the reference position tag. In this case, the estimation unit 332 updates the value of 'Located Point' of the record of the detected management target 30 in the target table 321 to the positional coordinates of the estimated point.
It should be noted that, in a case where two or more position tags are detected together with the target tag 50 with a time difference smaller than the above threshold, the position tag with the highest reception level or the position tag with the smallest difference in detection time may be selected as the reference position tag. Alternatively, the management target 30 may be estimated to be positioned at a certain point among the installation points of the two or more position tags (for example, a gravity center or a point designated in advance). In the first embodiment example, low-cost and efficient position management can be realized though it has rough position estimation accuracy.
In a second embodiment example of position estimation, finer estimation is performed using a self-localization technique. For example, as described above, assume that a mobile reader 100 reads a tag ID from a reference position tag at a first point in time, and reads a tag ID from a target tag 50 attached to a management target 30 at a second point in time. Compared to the first embodiment example, the time difference between the first point in time and the second point in time may be larger in the second embodiment example (that is, the above-described condition of the time difference may not be imposed). The estimation unit 332 can estimate positional coordinates of a point at which the detected management target 30 (the target tag 50) is positioned based on the relative amount of movement of the mobile reader 100 between the first point in time and the second point in time and the known position of the reference position tag according to the following formula:

$$(u, v, h) = (U_0 + (X - X_0), V_0 + (Y - Y_0), H_0 + (Z - Z_0))$$

where (X, Y,Z) denotes the amount of movement measured at the second point in time, and $(X_0, Y_0, Z_0)$ denotes the amount of movement measured at the first point in time. $(U_0, V_0, H_0)$ denotes the known positional coordinates of the point at which the reference position tag is installed. It should be noted that a height direction component H may be derived by applying a measured value of the atmospheric pressure to a relational expression representing an air pressure-to-height model, rather than using the above-described formula. The estimation unit 332 updates the values of 'Located Point' of the record of the detected management target 30 in the target table 321 to the positional coordinates estimated in this way.

In the second embodiment example, the estimation unit 332 may estimate that the detected management target 30 is positioned in the installation section associated with the tag ID of the reference position tag. Alternatively, the estimation unit 332 may estimate the located section of the management target 30 by referring to the geographical information of each section 10 to determine to which section 10 the estimated positional coordinates of the management target 30 belong. The estimation unit 332 updates the value of 'Located Section' of the record of the detected management target 30 in the target table 321 to the section ID identifying the estimated section.

The tag detection table 325 of the position information DB 320 is used for accumulating records of reading result data (hereinafter referred to as reading result records) received from the mobile readers 100 and the fixed readers 110. The tag detection table 325 may have, for example, one or more of the following data elements:

'Reading Time'
'Tag ID'
'Reader ID'
'Received Strength'

'Reading Time' represents a time at which reading of the tag ID was done for each reading result record. 'Tag ID' represents the tag ID that was read for each reading result record. 'Reader ID' indicates a tag reader 110 that performed the tag reading for each reading result record by a value of 'Reader ID' of the reader table 324. 'Received Strength' represents a reception level of a signal received by the tag reader at the time of the tag reading for each reading result record.

It should be noted that the estimation unit 332 may estimate the position of the mobile reader 100 (the position of the user 20 who carries the mobile reader 100) in addition to (or instead of) the position of each management target 30. In the first embodiment example described above, the position of the mobile reader 100 is estimated simply from the position of the reference position tag selected based on the tag reading results without using the self-localization technique. In the second embodiment example described above, the position of the mobile reader 100 may be estimated more precisely according to the above formula using the self-localization technique.

<4-4. Provision of Position Information>

The information provision unit 333 can cause the display unit 221 of the terminal apparatus 200 to display position information of the respective management targets 30 in order to assist a user in ascertaining locations of the management targets. In particular, in the present embodiment, the real space is regularly segmented into a plurality of coordinate regions (also referred to as grid) so that a comprehensive or broad understanding of the locations of the management targets can be grasped. The information provision unit 333 is capable of causing coordinate region information regarding coordinate regions to which positional coordinates estimated for the respective management targets belong to be displayed on a screen. In addition, the information provision unit 333 is capable of causing located section information regarding located sections estimated for the respective management targets to be displayed on the screen.

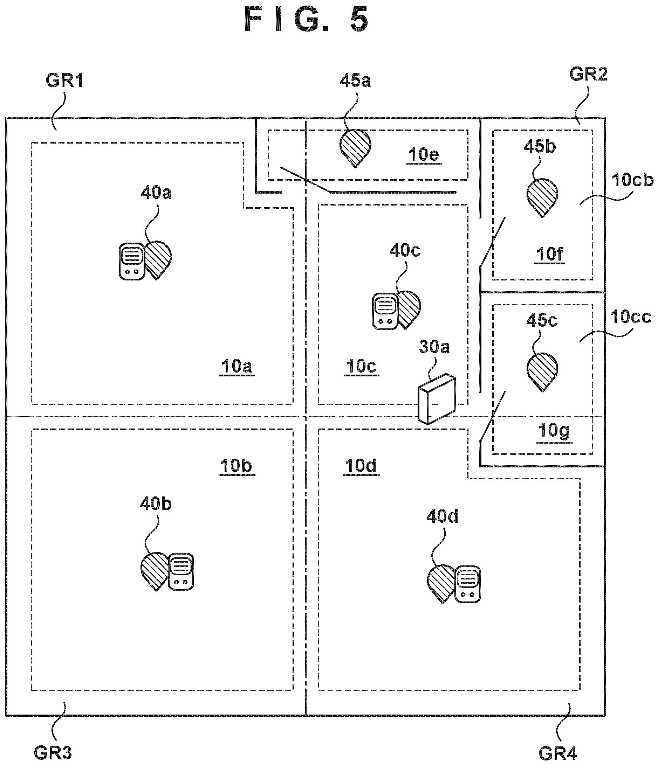

FIG. 5 illustrates an example of a plurality of coordinate regions. With reference to FIG. 5, there are sections 10a to 10g set in a space of one floor of a building. Moreover, there are paired position tags 40a to 40d respectively installed in the sections 10a to 10d, and non-paired position tags 45a to 45c respectively installed in the sections 10e to 10g. In addition, the entire space of the floor is segmented into a total of four rectangular coordinate regions GR1 to GR4 arranged in a 2 × 2 layout. The shapes of the coordinate regions may be uniform, and the spacing of the boundary lines between the coordinate regions may be constant on each coordinate axis. The boundary lines of the coordinate regions indicated by the dot-dash lines in the figure may be or may not be aligned with the boundary lines of the sections 10 indicated by the bold lines in the figure.

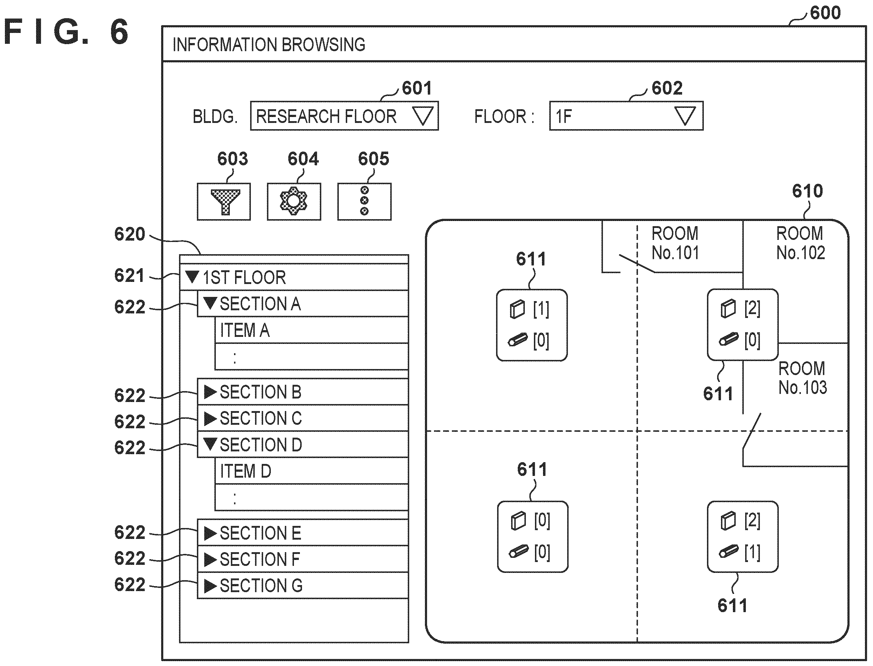

FIG. 6 illustrates a first example of a configuration of an information browsing screen that may be provided by the information provision unit 333. The information browsing screen 600 may be called in response to a user input via the operation unit 215 of the terminal apparatus 200 and displayed by the display unit 221 of the terminal apparatus 200, for example. With reference to FIG. 6, the information browsing screen 600 includes a building selection field 601, a floor selection field 602, a function buttons 603, 604, 605, a map display area 610, and a list display area 620. When a building and a floor for which the user wishes to browse position information are selected in the fields 601 and 602, a map image of the selected floor is displayed in the map display area 610. The information provision unit 333 superimposes boundary lines (the dashed lines in the figure) representing boundaries of the plurality of coordinate regions on this map image, and further superimposes the coordinate region information. In the example in FIG. 6, a total of four coordinate regions in the 2 × 2 layout are set in the selected floor.

As an example, the coordinate region information displayed on the screen may include statistics information regarding management targets that are estimated to be positioned at each coordinate region. The statistics information herein may include the number of management targets selected according to a certain filtering condition counted for each coordinate region, for example. The number of management targets may be counted for each target type. The function button 603 is a button for calling a UI for a user to designate the filtering condition. The filtering condition herein may include one or more of, for example, a condition related to management targets, and a condition related to a tag reader that detected a management target. For example, the condition related to management targets may include a condition related to a name or a target type of management targets. The condition related to a tag reader may include a condition to extract only management target(s) detected by a specific tag reader (for example, the tag reader used by a logged-in user).

In the example of FIG. 6, boxes 611 are superimposed on each of the four coordinate regions of the map display area 610. Each box 611 indicates the number of management targets estimated to be currently positioned in the corresponding coordinate region for each target type. By presenting the statistics information in units of coordinate regions in this manner makes it possible for a user to easily and quickly ascertain an overview of locations of management targets at the latest point in time or a point in time designated by the user. This also makes it possible to avoid cluttering the screen with information in situations where a large number of management targets exist.

The list display area 620 includes list items 621 and 622 that can be expanded and collapsed. The list item 621 corresponds to "Floor 1F" selected in the floor selection field 602. The list items 622 corresponds to respective sections 10 set in "Floor 1F". When the user operates one of the list items 622, a list of management targets located in the section 10 corresponding to the operated list item 622 is displayed (and if the same list item 622 is operated again, the list of management targets which have been once displayed will be hidden).

The function button 604 is a button for calling a UI that allows a user to change settings related to information display. The function button 605 is a button for calling a UI that allows activation of a certain supplementary function. These UIs may be configured according to any publicly-known technique, and will therefore not be described in detail here. The settings related to information display may include a size of the coordinate regions described above, for example. The supplementary function may include downloading a data file of a list regarding displayed management targets, for example.

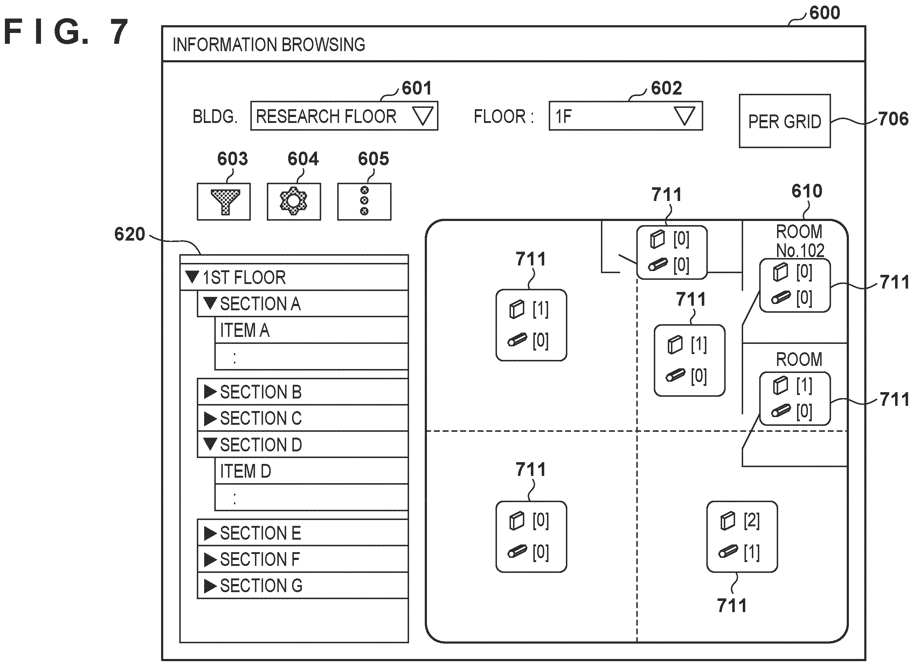

FIG. 7 illustrates a second example of a configuration of an information browsing screen that may be provided by the information provision unit 333. In the second example, the information provision unit 333 causes one of the coordinate region information and the located section information to be displayed in accordance with selection by a user in a manner that it is superimposed on a map image in the map display area 610. With reference to FIG. 7, the information browsing screen 600 includes a display switch button 706 in addition to the constituent elements described in connection with FIG. 6. The display switch button 706 is a button for switching the information displayed in the map display area 610 between the coordinate region information and the located section information. For example, in a case where the user operates the display switch button 706 in a state in which the coordinate region information is displayed in the map display area 610, the information provision unit 333 causes the located section information to be displayed in the map display area 610 instead of the coordinate region information. In a case where the user operates the display switch button 706 in a state in which the located section information is displayed in the map display area 610, the information provision unit 333 causes the coordinate region information to be displayed in the map display area 610 instead of the located section information. As an example, the located section information may include statistics information regarding management targets that are estimated to be positioned in each section. The statistics information herein may include the number of management targets selected according to a certain filtering condition counted for each located section, for example. The number of management targets may be counted for each target type. In the example of FIG. 7, seven boxes 711 are superimposed on the map image in the map display area 610. Each box 711 indicates the number of management targets estimated to be currently positioned in the corresponding sections for each target type.

<4-5. Abnormality Detection>

In the example of FIG. 7, the box 711 at the left bottom part of the map display area 610 indicates that the number of management target 30 existing in the corresponding section 10 is zero. However, it is not clear by this indication whether there is actually no management target 30 in the section 10b or an abnormality has occurred with the reading system 105b installed in the section 10b.

Assuming the above-described situation, the abnormality detection unit 334 monitors statuses of wireless devices and tag readers under management of the position management system 1 so that properly-estimated position information can be appropriately distinguished from abnormalities of the system. Specifically, in the present embodiment, the abnormality detection unit 334 detects an abnormality related to a paired position tag 40 based on results of attempting to read a tag ID from the paired position tag 40 by a fixed reader 110. In addition, the abnormality detection unit 334 may take a result of reading the tag ID from the paired position tags 40 by a mobile reader 100 into consideration to isolate an abnormality of the paired position tag 40 from an abnormality of the fixed reader 110. Furthermore, the abnormality detection unit 334 may detect an abnormality related to a non-paired position tag 45 based on a result of reading a tag ID from the non-paired position tag 45 by a mobile reader 100. The monitoring DB 340 is a database used for such monitoring and abnormality detection by the abnormality detection unit 334.

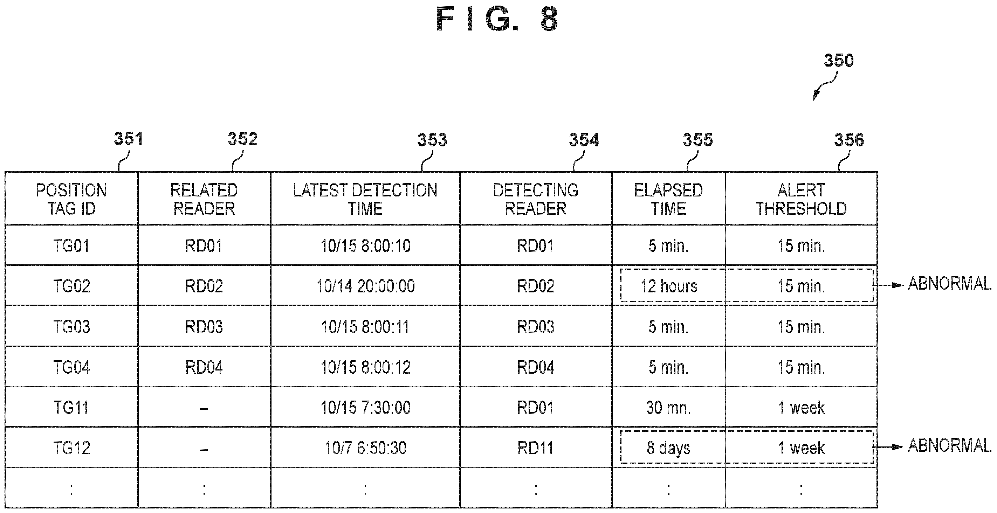

FIG. 8 is an explanatory diagram illustrating an example of a configuration of the tag monitoring table 350 of the monitoring DB 340. With reference to FIG. 8, the tag monitoring table 350 may have six data elements, namely, Position Tag ID 351, Related Reader 352, Last Detection Time 353, Detecting Reader 354, Elapsed Time 355, and Alert Threshold 356. Position Tag ID 351 is identification information that uniquely identifies each of the position tags to be monitored. Related Reader 352 identifies, when the position tag identified by Position Tag ID 351 is a paired position tag 40, the fixed reader 110 paired with that position tag 40 by a value of 'Reader ID' of the reader table 324. When the position tag identified by Position Tag ID 351 is a non-paired position tags 45, Related Reader 352 is blank. Last Detection Time 353 represents a time at which each position tag was last detected by any tag reader. Detecting Reader 354 identifies a tag reader that last detected each position tag by a value of 'Reader ID' of the reader table 324. Elapsed Time 355 represents a time length that has elapsed from the Last Detection Time 353 to the current time. Alert Threshold 356 represents a time threshold that is used for determining whether an abnormality related to each position tag has occurred. As described below in detail, the time threshold indicated by Alert Threshold 356 is compared to the time length indicated by Elapsed Time 355 (that is, the elapsed time from the last detection time). When this elapsed time (5 minutes for the record identified by the position tag ID "TG01" in FIG. 8) is below the time threshold (15 minutes for the same record), it may be considered that an abnormality related to the corresponding position tag has not occurred. For example, it may be considered that all of the position tag, (tag reading and communication functions of) the corresponding tag reader and the data uploading path from them to the management server 300 are working properly. On the other hand, when the above elapsed time exceeds the time threshold, it is likely that an abnormality related to the corresponding position tag has occurred.

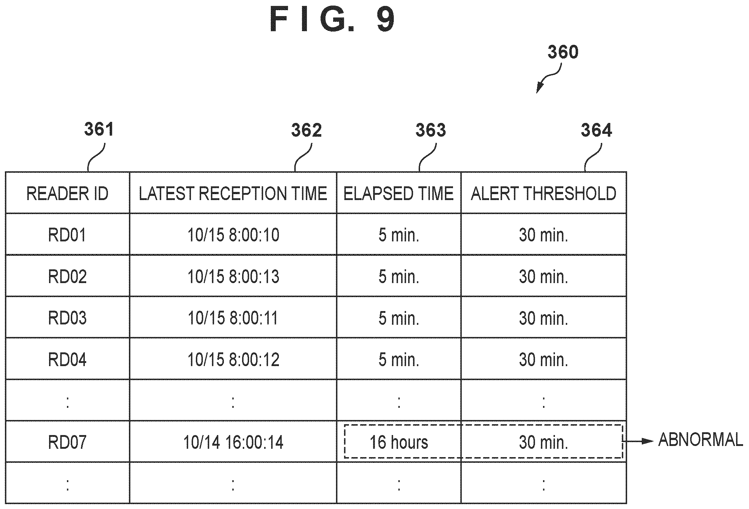

FIG. 9 is an explanatory diagram illustrating an example of a configuration of the reader monitoring table 360 of the monitoring DB 340. With reference to FIG. 9, the reader monitoring table 360 may have four data elements, namely, Reader ID 361, Last Reception Time 362, Elapsed Time 363, and Alert Threshold 364. Reader ID 361 is identification information that uniquely identifies each of the tag readers to be monitored. The tag readers to be monitored may include only the fixed readers 110, or may include both of the fixed readers 110 and the mobile readers 100. Last Reception Time 362 represents a time at which data was last received from each tag reader. Elapsed Time 363 represents a time length that has elapsed from the Last Reception Time 362 to the current time. Alert Threshold 364 represents a time threshold that is used for determining whether an abnormality related to each tag reader has occurred.

The abnormality detection unit 334 monitors statuses of the position tags and the tag readers using these tag monitoring table 350 and reader monitoring table 360. For example, suppose that results of attempting to read by a fixed reader 110 indicate that it has not read the tag ID from the paired position tag 40 corresponding to that fixed reader 110 over a preset first time length. In this case, the abnormality detection unit 334 determines that an abnormality related to the paired position tag 40 has occurred. In the example in Figure 8, the paired position tag identified by the position tag ID "TG02" (denoted as a position tag 40b) has not been detected by any tag reader over the elapsed time of twelve hours from the last detection time to the current time. Thus, the abnormality detection unit 334 can determine that a certain abnormality related to the position tag 40b has occurred.

As another example, suppose that the tag monitoring table 350 indicates that none of the tag readers has read a tag ID from a non-paired position tag 45 over a preset second time length. In this case, the abnormality detection unit 334 determines that an abnormality related to that non-paired position tag 45 has occurred. In the example in Figure 8, the non-paired position tag identified by the position tag ID "TG12" (denoted as a position tag 45b) has not been detected by any tag reader over the elapsed time of more than eight days from the last detection time to the current time. Thus, the abnormality detection unit 334 can determine that a certain abnormality related to the position tag 45b has occurred.

The first time length and the second time length for anomaly detection described above are illustrated as the values of the alert threshold 356 in the tag monitoring table 350. Typically, the second time length, which is the alert threshold for non-paired position tags 45, may be set longer than the first time length, which is the alert threshold for paired position tags 40. In the example of FIG. 8, the first time length is 15 minutes and the second time length is one week. A paired position tag 40 is supposed to be detected periodically by its paired fixed reader 110 if there is no abnormality, whereas a non-paired position tag 45 is detected only when it comes in a reading range of a mobile reader 100 that is moving. Hence, by setting the second time length to a value longer than the first time length, it is possible to avoid overly frequent abnormality detection due to a non-paired position tag 45 being not detected. For example, the first time length may be set based on periodicity of tag reading attempts by the fixed readers 110, and the second time length may be set based on the number of users 20 carrying a mobile reader 100 and the frequency of their patrols in the real space.

Alternatively or additionally, the first time length and the second time length may be individually configurable for each wireless device (position tag). For example, in a case where periodicity of attempting to read tags by the fixed readers 110 are not uniform (depending on power saving requirements or their performance, for example), the first time length may be set to different value for each paired position tag 40. In a case where frequencies at which users 20 patrol within respective sections in which the non-paired position tags 45 are installed are different, the second time length may be set to a different value for each of the non-paired position tags 45. This allows the position management system 1 as a whole to optimize the sensitivity of abnormality detection.

As described above, at least the fixed readers 110 communicate with the management server 300 periodically. If a fixed reader 110 has not detected an RFID tag in the recent past, communication data that the management server 300 receives from the fixed reader 110 contains no reading result data, which means that an RFID tag has not been detected. As long as this periodic communication is going on, the abnormality detection unit 334 determines that the fixed reader 110 is operating properly. On the other hand, when no data has been received from the fixed reader 110 for a preset third time length, the abnormality detection unit 334 determines that an abnormality has occurred at the fixed reader 110. It should be noted that, in an alteration example, the abnormality detection unit 334 may determine that an abnormality has occurred at the fixed reader 110 on the condition that, when communication from the fixed reader 110 has stopped, it transmits a query signal to the fixed reader 110 and no response signal to the query signal is received. In this alteration example, the fixed readers 110 do not necessarily need to communicate with the management server 300 periodically. In another alteration example, the abnormality detection unit 334 may take a received strength indicated by reading result data received from each fixed reader 110 into consideration in detecting an abnormality of each fixed reader 110. For example, when a received strength at a certain fixed reader 110 measured for a signal from its paired position tag 40 is significantly lower compared to the strength at normal times (or lower than a preset threshold), the abnormality detection unit 334 may determine that an abnormality has occurred at that fixed reader 110.

In the example of FIG. 9, for the fixed reader identified by the reader ID "RD02" (denoted as a fixed reader 110b), the elapsed time from the last reception time is 5 minutes, which is below the value of Alert Threshold 364 (the third time length), that is, 30 minutes. Thus, the abnormality detection unit 334 determines that the fixed reader 110b is operating properly. The abnormality detection unit 334 may take this status of the fixed reader 110b paired with the paired position tag 40b into consideration in abnormality determination on the paired position tag 40b. That is, even when the elapsed time from the last detection time of the paired position tag 40b exceeds the first time length, it is not enough to completely isolate whether there is an abnormality at the paired position tag 40b or at the fixed reader 110b. However, in the above-described example, as the abnormality detection unit 334 knows that there is no abnormality at the fixed reader 110b from the history of communication with the fixed reader 1 10b, it can make a final determination that there is an abnormality at the paired position tag 40b.

In the example of FIG. 9, the elapsed time from the last reception time of the fixed reader identified by the reader ID "RD07" exceeds 30 minutes that is the third time length. Thus, the abnormality detection unit 334 determines that an abnormality has occurred at this fixed reader. Typically, the third time length may be set to a value that is equal to or larger than the periodicity of communication between the fixed reader 110 and the management server 300.

In a further example, suppose that a fixed reader 110 has not read a tag ID from its corresponding paired position tag 40 within a certain period of time, and that a mobile reader 100 has read the tag ID from the paired position tag 40 within that period of time. The latter reading result indicates that, from among the fixed reader 110 and the corresponding paired position tag 40, at least the paired position tag 40 is operating properly. Thus, the abnormality detection unit 334 determines that an abnormality has occurred at this fixed reader 110 based on such results of (attempts) of tag reading. In this manner, by considering data received from both of the fixed readers 110 and the mobile readers 100, it is possible to isolate an abnormality of a fixed reader 110 from an abnormality of its paired position tag 40, even if the fixed reader 110 does not communicate with the management server 300 periodically.

It should be noted that the configurations of the position information DB 320 and the monitoring DB 340 are not limited to the examples described in this specification. Two or more tables described may be merged into a single table, and one of the tables may be divided into two or more tables. Each table may include additional data elements, and may not include one or more of the described data elements. For example, the tag monitoring table 350 may be merged with the position tag table 323. Similarly, the reader monitoring table 360 may be merged with the reader table 324.

In addition to the statuses of wireless devices and tag readers, the abnormality detection unit 334 may be capable of detecting a status of being normal or abnormal regarding the following portions on the communication path between a reading system 105 and the management server 300:

- In a case where a relay apparatus relays communication between the tag reader and the management server 300

    - the communication channel between the tag reader and the relay apparatus
    - the relay function of the relay apparatus
    - the communication channel between the relay apparatus and the management server

- In a case where the tag reader directly communicates with the management server 300

-   the communication channel between the tag reader and the management server

As a method to detect an abnormality that may occur at these portions is widely known in the art of communication technology, the method will not be described here.

<4-6. Notification of Occurrence of Abnormality>

When the abnormality detection unit 334 has detected a certain abnormality as a result of the above-described monitoring, it notifies (or alerts) a user of occurrence of the abnormality. For example, the notification of the occurrence of the abnormality may be performed on a screen displayed by the terminal apparatus 200. The abnormality detection unit 334 may provide position information related to a position at which the abnormality has detected on the screen. The position information herein may be, for example, information that indicates an installation section or an installation point of a paired position tag 40, a fixed reader 110, or a non-paired position tag 45 with which the abnormality has detected.

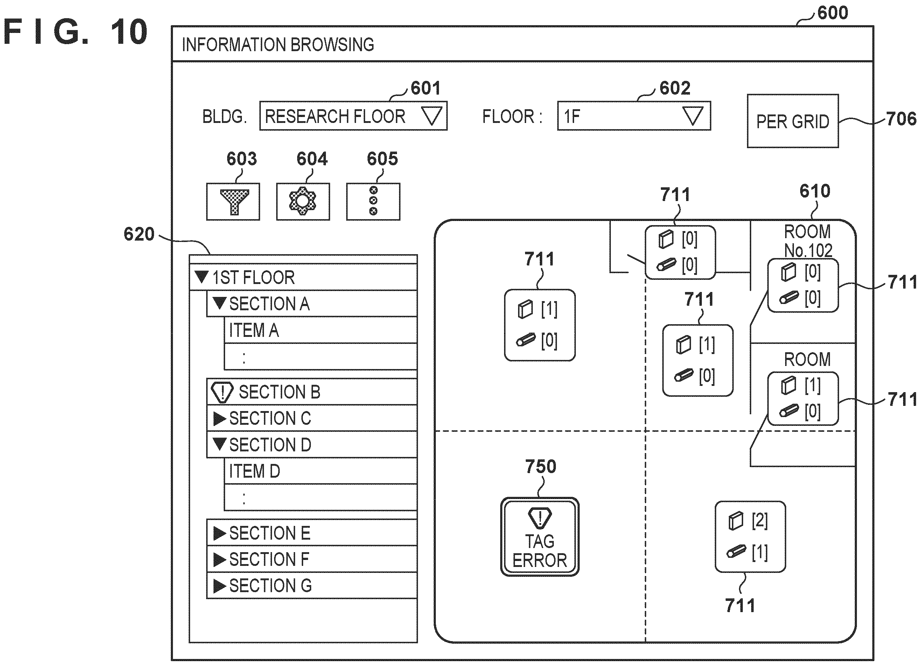

FIG. 10 illustrates an example of notification of abnormality occurrence on an information browsing screen 600 described using FIG. 7. The information browsing screen 600 illustrated in FIG. 10 includes constituent elements described in connection with FIGS. 6 and 7, however, there is a box 750 instead of the box 711 displayed in the bottom-left portion of the map display area 610. The box 750 includes a text notifying that an abnormality has occurred with the paired position tag 40b installed in the section 10b ("Section B") corresponding to this display position. Upon seeing the notification displayed in this manner, the user can easily notice the occurrence of the abnormality in the system, and can quickly take an action such as checking an installation state of the tag or replacing the tag, for example.

The notification of abnormality occurrence in the position management system 1 is not limited to the above-described example. For example, the notification of abnormality occurrence may be performed in any mode such as transmission of a message (for example, an e-mail) to an account of a management user, output of a speech message or an alert sound, or recording in an operation log. A uniform resource locator (URL) for accessing the information browsing screen (notification screen) as illustrated in FIG. 10 may be described in the message transmitted to the account of the management user.

<5. Flow of Processing>

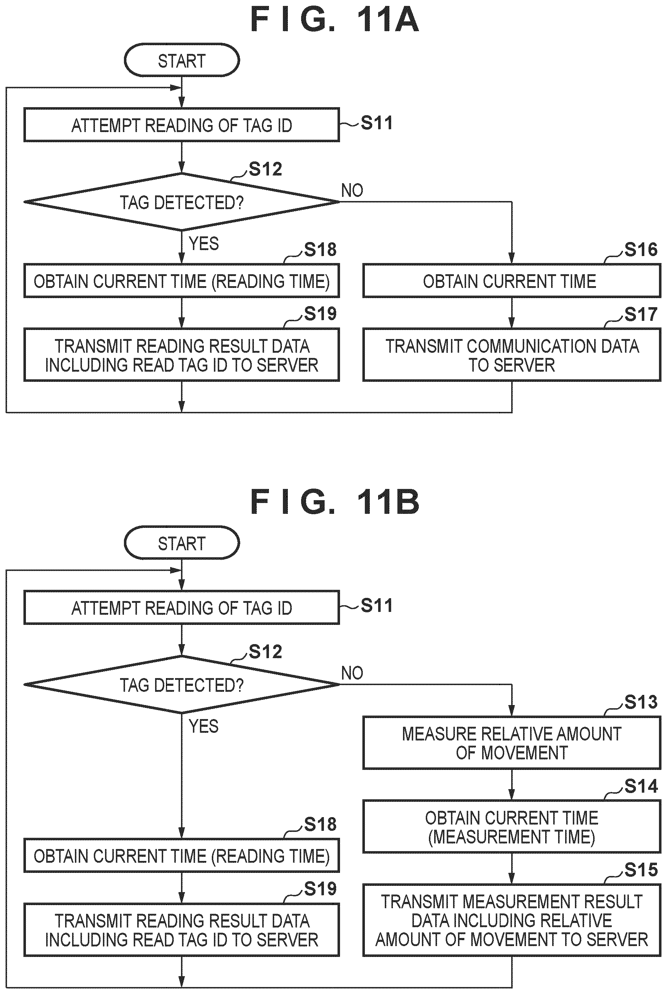

In this section, some examples of flows of processing that may be performed in the position management system 1 will be described using the flowcharts of FIGS. 11A to 15. Note that, in the following descriptions, a processing step will be abbreviated as S (Step).

<5-1. Data Transmission Processing>

(1) First Example

FIG. 11A is a flowchart illustrating a first example of a flow of data transmission processing performed by a tag reader. The data transmission processing according to the first example may be performed by the fixed reader 110, and a mobile reader 100 that does not have the measuring unit 114.

First, in S11, the reading unit 116 attempts to read a tag ID from a nearby RFID tag by emitting electromagnetic waves within its reading range. When a tag ID has been received from a nearby RFID tag utilizing the energy of the electromagnetic waves as a result of the attempt of tag reading (S12-YES), the processing proceeds to S18. Meanwhile, when no tag ID is received (S12-NO), the processing proceeds to S16.

In S16, the control unit 111 obtains the current time by referring to an internal real-time clock, for example. Next, in S17, the control unit 111 transmits communication data including the current time and the reader ID (and not including reading result data) to the management server 300 via the communication unit 113.

In S18, the control unit 111 obtains the current time as a reading time of the tag ID. Next, in S19, the control unit 111 transmits reading result data including the read tag ID, the reading time, the reception level, and the reader ID to the management server 300 via the communication unit 113.

Then, the processing returns to S11. Such data transmission processing may be periodically performed at a preset periodicity.

(2) Second Example

FIG. 11B is a flowchart illustrating a second example of a flow of data transmission processing performed by a tag reader. The data transmission processing according to the second example may be performed by a mobile reader 100 that has the measuring unit 114.

First, in S11, the reading unit 116 attempts to read a tag ID from a nearby RFID tag by emitting electromagnetic waves within its reading range. When a tag ID has been received from a nearby RFID tag utilizing the energy of the electromagnetic waves as a result of the attempt of tag reading (S12-YES), the processing proceeds to S18. Meanwhile, when no tag ID is received (S12-NO), the processing proceeds to S13.

In S13, the measuring unit 114 measures a relative amount of movement of the local apparatus based on sensor data output from a three-axis acceleration sensor, a gyro sensor, and a geomagnetic sensor, for example. At this point, the measuring unit 114 may further cause an air pressure sensor to gauge an atmospheric air pressure. Next, in S14, the control unit 111 obtains the current time as a measurement time by referring to an internal real-time clock, for example. Next, in S15, the control unit 111 transmits measurement result data including the relative amount of movement measured by the measuring unit 114, the measurement time, and the reader ID to the management server 300 via the communication unit 113.

In S18, the control unit 111 obtains the current time as a reading time of the tag ID. Next, in S19, the control unit 111 transmits reading result data including the read tag ID, the reading time, the reception level, and the reader ID to the management server 300 via the communication unit 113.

Then, the processing returns to S11. Such data transmission processing may be periodically performed while the mobile reader 100 is kept active.

<5-2. Position Estimation Processing>

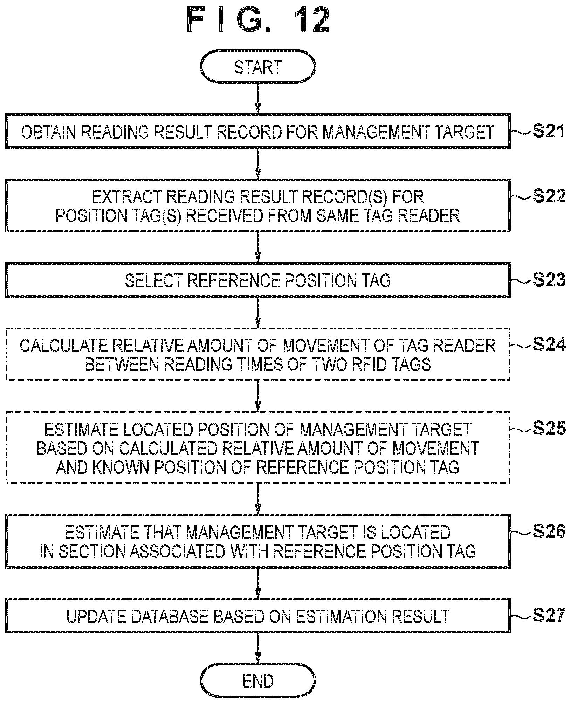

FIG. 12 is a flowchart illustrating an example of a flow of position estimation processing performed by the management server 300. At the point in time when the position estimation processing of FIG. 12 is initiated, it is assumed that there are some reading result records accumulated in the tag detection table 325.

First, in S21, the estimation unit 332 of the management server 300 focuses on one management target 30 and obtains a reading result record for the target tag 50 attached to that management target 30 from the tag detection table 325. Next, in S22, the estimation unit 332 extracts, from the tag detection table 325, reading result records for one or more position tags 40, 45 received from the same tag reader as that of the reading result record obtained above. Next, in S23, the estimation unit 332 selects one reference position tag to be referred to for position estimation based on correlation between the reading result record for the target tag 50 and the one or more reading result records for position tags 40, 45.

The subsequent S24 and S25 are processing steps that may be executed in an embodiment example where the position management system 1 includes a mobile reader 100 that has the measuring unit 114. In S24, the estimation unit 332 calculates the relative amount of movement of the tag reader between the reading time of the target tag 50 and the reading time of the reference position tag based on the measurement result data received from the tag reader. Next, in S25, the estimation unit 332 estimates positional coordinates of the management target of interest based on the calculated relative amount of movement and the known position of the reference position tag.

Next, in S26, the estimation unit 332 estimates that the section associated with the reference position tag in the position tag table 323 is the located section of the management target 30 of interest.

Then, in S27, the estimation unit 332 updates the field of Located Section 315 of the target table 321 with the section ID of the located section estimated in S26. In a case where S24 and S25 have been performed, the estimation unit 332 updates the field of Coordinates 316 of the target table 321 with the coordinate values of the positional coordinates estimated in S25.

The estimation unit 332 may sequentially focus on respective ones of one or more management targets that may have moved during a certain period to iterate the above-described processing on them. Such processing is performed on a regular basis so that the latest position information of each management target 30 can be maintained in the position information DB 320.

<5-3. Display Control Processing>

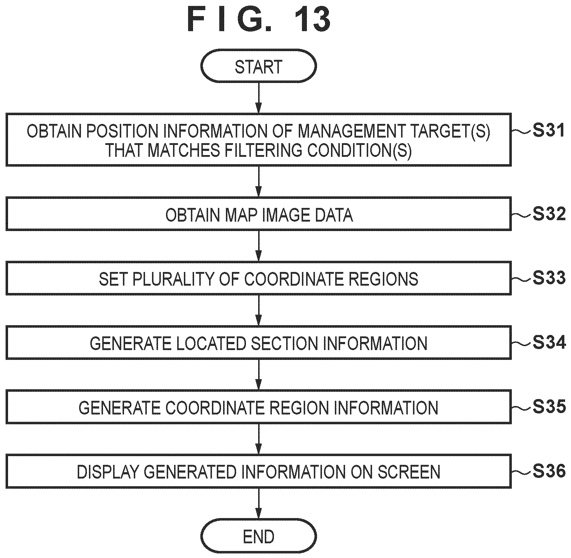

FIG. 13 is a flowchart illustrating an example of a flow of display control processing performed by the terminal apparatus 200 and the management server 300 cooperating with each other. Herein, it is assumed that the information browsing screen 600 described above is called by a user and is displayed by the display unit 221 under control by the control unit 211 of the terminal apparatus 200.

First, in S31, the information provision unit 333 of the management server 300 obtains, from the target table 321, position information of one or more management targets 30 which satisfy filtering conditions that may be designated at the terminal apparatus 200. For example, the information provision unit 333 may obtain, from the target table 321, located sections and positional coordinates of management targets that are estimated to be currently located in a designated section. Next, in S32, the information provision unit 333 obtains, from the section table 322, map image data of the designated section. Next, in S33, the information provision unit 333 sets a plurality of coordinate regions in the designated section.

Next, in S34, the information provision unit 333 generates located section information based on the located sections of the one or more management targets obtained in S31. In addition, in S35, the information provision unit 333 generates coordinate region information based on the positional coordinates of the one or more management targets obtained in S31.

Next, in S36, the information provision unit 333 transmits the generated located section information and coordinate region information to the terminal apparatus 200 via the communication unit 310. The control unit 211 of the terminal apparatus 200 causes the display unit 221 to display the information browsing screen 600 based on one or both of the located section information and the coordinate region information received from the management server 300. The control unit 211, for example, controls the display unit 221 to display statistics information per located section or statistics information per coordinate region superimposed on the map image in the map display area 610 of the information browsing screen 600.

<5-4. Monitoring Processing>

(1) Reader Monitoring Processing

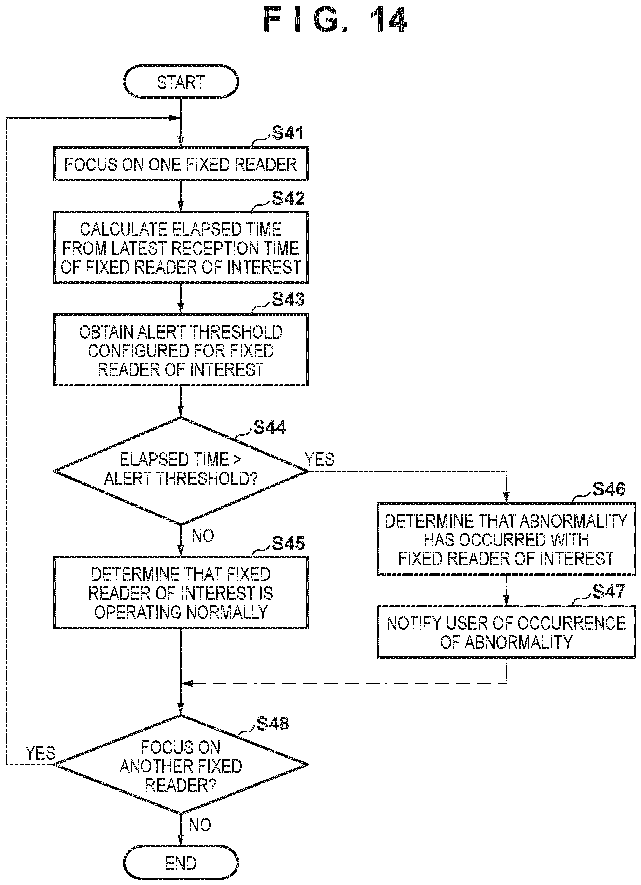

FIG. 14 is a flowchart illustrating an example of a flow of reader monitoring processing performed by the abnormality detection unit 334 of the management server 300. Herein, it is assumed that a plurality of fixed readers 110 under management of the position management system 1 are subject to monitoring.

First, in S41, the abnormality detection unit 334 focuses on one fixed reader 110. In S42, the abnormality detection unit 334 refers to the reader monitoring table 360 and calculates elapsed time from the last reception time of the fixed reader 110 of interest. Next, in S43, the abnormality detection unit 334 obtains the alert threshold (third time length) preset for the fixed reader 110 of interest. Then, in S44, the abnormality detection unit 334 determines whether the calculated elapsed time exceeds the alert threshold or not. Herein, in a case where the elapsed time does not exceed the alert threshold, the processing proceeds to S45. Meanwhile, in a case where the elapsed time exceeds the alert threshold, the processing proceeds to S46.

In S45, the abnormality detection unit 334 determines that the fixed reader 110 of interest is operating properly.

On the other hand, in S46, the abnormality detection unit 334 determines that an abnormality has occurred at the fixed reader 110 of interest because the elapsed time from the last reception time exceeds the alert threshold for the fixed reader 110 of interest. Then, in S47, the abnormality detection unit 334 notifies a user of occurrence of the abnormality.

After that, in S48, the abnormality detection unit 334 determines whether there remains another fixed reader 110 to be focused on out of the fixed readers 110 that are subject to monitoring. In a case where there remains another fixed reader 110 to be focused on, the processing goes back to S41, and the above-described processing is repeated for the remaining fixed reader 110. In a case where there remains no other fixed reader 110 to be focused on, the reader monitoring processing in FIG. 14 ends.

Such reader monitoring processing may be performed regularly during a period when the position management system 1 operates.

(2) Tag Monitoring Processing

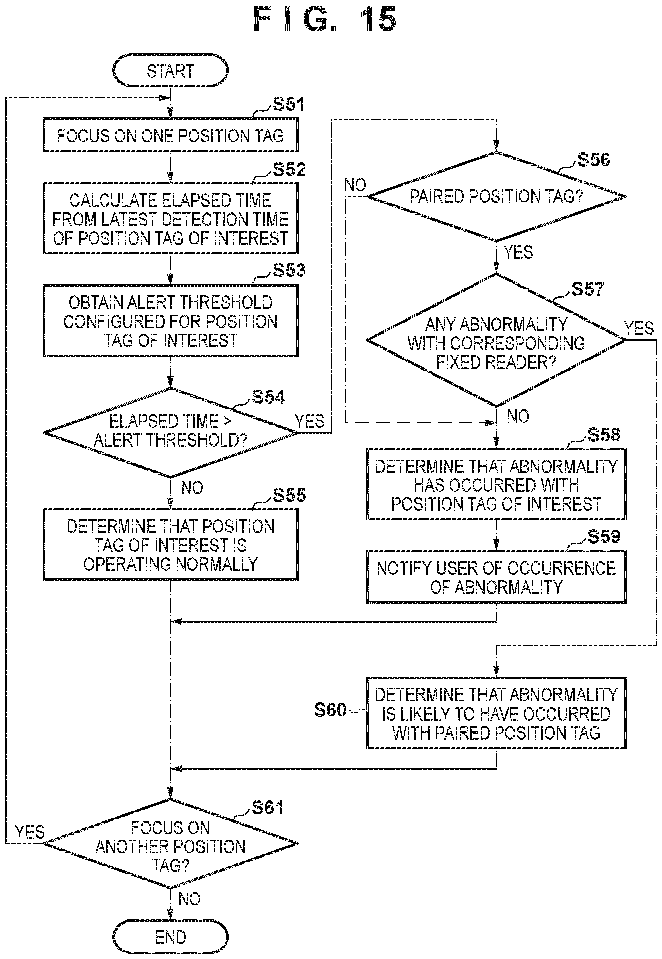

FIG. 15 is a flowchart illustrating an example of a flow of tag monitoring processing performed by the abnormality detection unit 334 of the management server 300. Herein, it is assumed that a plurality of paired position tags 40 and non-paired position tags 45 under management of the position management system 1 are subject to monitoring.

First, in S51, the abnormality detection unit 334 focuses on one position tag. In S52, the abnormality detection unit 334 refers to the tag monitoring table 350 and calculates elapsed time from the last detection time of the position tag of interest. Next, in S53, the abnormality detection unit 334 obtains the alert threshold preset for the position tag of interest. The alert threshold obtained here corresponds to the first time length when the position tag of interest is a paired position tag, and corresponds to the second time length when the position tag of interest is a non-paired position tag. Then, in S54, the abnormality detection unit 334 determines whether the calculated elapsed time exceeds the alert threshold or not. Herein, in a case where the elapsed time does not exceed the alert threshold, the processing proceeds to S55. Meanwhile, in a case where the elapsed time exceeds the alert threshold, the processing proceeds to S56.

In S55, the abnormality detection unit 334 determines that the position tag of interest is operating properly.

On the other hand, in a case where the elapsed time from the last reception time exceeds the alert threshold for the position tag of interest, in S56, the processing branches depending on whether the position tag of interest is a paired position tag or a non-paired position tag. In a case where the position tag of interest is a paired position tag, the processing proceeds to S57. Meanwhile, in a case where the position tag of interest is a non-paired position tag, the processing proceeds to S58.

In S57, the abnormality detection unit 334 determines whether an abnormality has been detected or not for a fixed reader 110 corresponding to the paired position tag 40 of interest based on the result of reader monitoring processing described above, for example. In a case where there is an abnormality at the corresponding fixed reader 110, the processing proceeds to S60. Meanwhile, there is no abnormality at the corresponding fixed reader 110, the processing proceeds to S58.

In S58, the abnormality detection unit 334 determines that an abnormality has occurred at the position tag of interest (paired position tag or non-paired position tag). Then, in S59, the abnormality detection unit 334 notifies a user of occurrence of the abnormality.

In S60, the abnormality detection unit 334 determines that there is a possibility that an abnormality has occurred at the paired position tag of interest. However, in this case, the reason why the paired position tag has not been detected for the time exceeding the alert threshold is likely to be an abnormality of the corresponding fixed reader 110. If the tag monitoring processing is performed again after the abnormality of the corresponding fixed reader 110 is settled, the status of the paired position tag will return to 'normal' in S55, whereas, if there is an abnormality at the paired position tag as well, the abnormality will be detected in S58.

In S61, the abnormality detection unit 334 determines whether there remains another position tag to be focused on out of the position tags that are subject to monitoring. In a case where there remains another position tag to be focused on, the processing goes back to S51, and the above-described processing is repeated for the remaining position tag. In a case where there remains no other position tag to be focused on, the tag monitoring processing in FIG. 15 ends.

Such tag monitoring processing may be performed regularly in parallel with the reader monitoring processing during a period when the position management system 1 operates.

<6. Modification Examples>

<6-1. First Modification Example>

Various modification examples can be contemplated for the above-described embodiments. For example, although FIG. 1A illustrates an example where one position tag 40 is paired with one fixed reader 110, the technology according to the present disclosure is not limited to this example. In order to detect an abnormality of a plurality of position tags 40, one fixed reader 110 of which reading range includes those position tags 40 may be installed. There may also a fixed RFID tag dedicated for abnormality detection that is not used for position estimation.

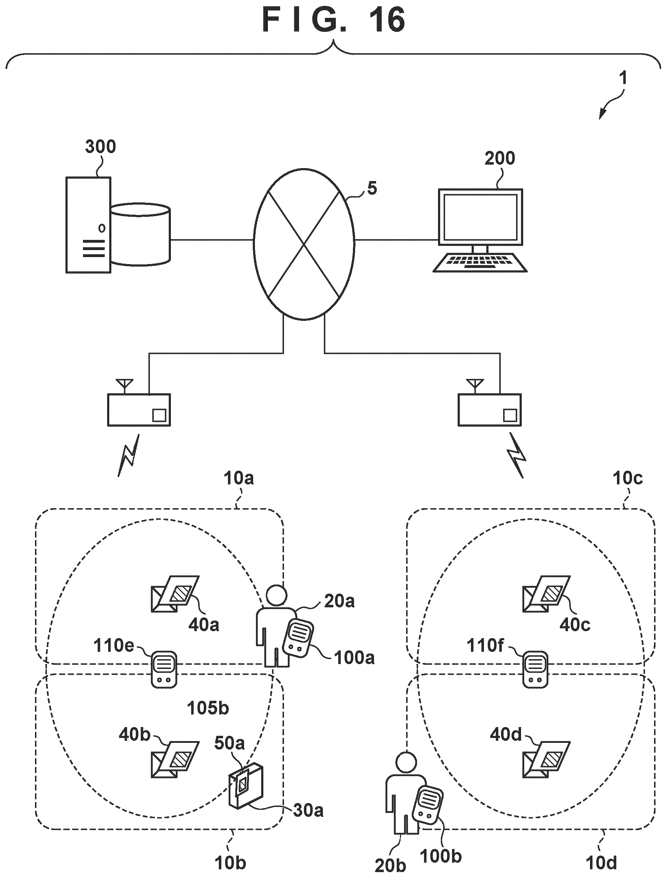

FIG. 16 is a schematic view illustrating an example of a configuration of the position management system 1 according to the first modification example. With reference to FIG. 16, there is a position tag 40a installed in the section 10a, a position tag 40b in the section 10b, a position tag 40c in the section 10c, and a position tag 40d in the section 10d in a similar manner to the example of FIG. 1A. However, in the first modification example, a fixed reader 110e is installed in the vicinity of a boundary between the section 10a and the section 10b. The known installation positions of the position tags 40a and 40b are within the reading range of the fixed reader 1 10e. In addition, a fixed reader 110f is installed in the vicinity of a boundary between the section 10c and the section 10d. The known installation positions of the position tags 40c and 40d are within the reading range of the fixed reader 1 10f. Even when the fixed readers 110 are arranged in this manner, the estimation unit 332 of the management server 300 can estimate positions of respective management targets 30 based on reading result data received from mobile readers 100 and fixed readers 110. Moreover, the abnormality detection unit 334 can detect an abnormality related to the paired position tags 40a and 40b based on results of attempting to read a tag ID by the fixed reader 110e. Similarly, the abnormality detection unit 334 can detect an abnormality related to the paired position tags 40c and 40d based on results of attempting to read a tag ID by the fixed reader 110f.

<6-2. Second Modification Example>

Although an example has been mainly described in the above embodiments where a pair of a position tag 40 and a fixed reader 110 constitute a reading system 105 by which an abnormality related to the position tag 40 is detected and a cause of the abnormality is broken down, the technology according to the present disclosure is not limited to this example. In a second modification example, an RFID tag for abnormality detection (hereinafter, referred to as an abnormality detection tag) that is paired with a mobile reader 100 may be introduced in order to detect an abnormality of the mobile reader 100.

In the second modification example, the abnormality detection tag has specific identification information stored therein, and is collocated with a mobile reader 100 instead of being installed at a specific point. Herein, the language "X is collocated with Y" encompasses various modes in which X is disposed or installed at a common location with Y. For example, when X is collocated with Y, possible modes include those in which X is affixed to, linked to, placed on, embedded in, or attached to Y, and those in which X is maintained in close proximity to Y (such as by being packed together with Y in a larger container). Therefore, as the mobile reader 100 moves, the abnormality detection tag that is collocated with the mobile reader 100 (and thus paired with the mobile reader 100) moves together with the mobile reader 100, and is always located within the reading range of the mobile reader 100.

In the second modification example, when the mobile reader 100 or a fixed reader 110 has read a tag ID from a target tag 50, the estimation unit 332 of the management server 300 estimates a position of the management target 30 based on the result of reading the tag ID from the target tag 50. In the present modification example, as in the case of the position estimation processing described using FIG. 12, the estimation unit 332 may estimate one or both of a located section and positional coordinates of the management target 30 based on detection results for the target tag 50 and a reference position tag received from the same tag reader. Alternatively, in the present modification example, the estimation unit 332 may estimate a position of the management target 30 using a publicly-known positioning technology such as GPS positioning or a base station positioning without relying on detection results of the position tags 40. For example, in a case where a GPS unit is mounted on the mobile reader 100, the estimation unit 332 may estimate that the management target 30 to which the target tag 50 is attached is located at a measured position determined by the GPS unit at a point in time when the target tag 50 has been detected by the mobile reader 100. In this case, the position management system 1 does not necessarily include a position tag 40 fixedly installed in a real space.

The abnormality detection unit 334 of the management server 300 determines that an abnormality related to the abnormality detection tag has occurred when results of attempting to read tags indicate that the mobile reader 100 has not read a tag ID from the corresponding abnormality detection tag over a preset time length. The abnormality related to the abnormality detection tag herein may include at least one of an abnormality of the mobile reader 100 and an abnormality of the abnormality detection tag.

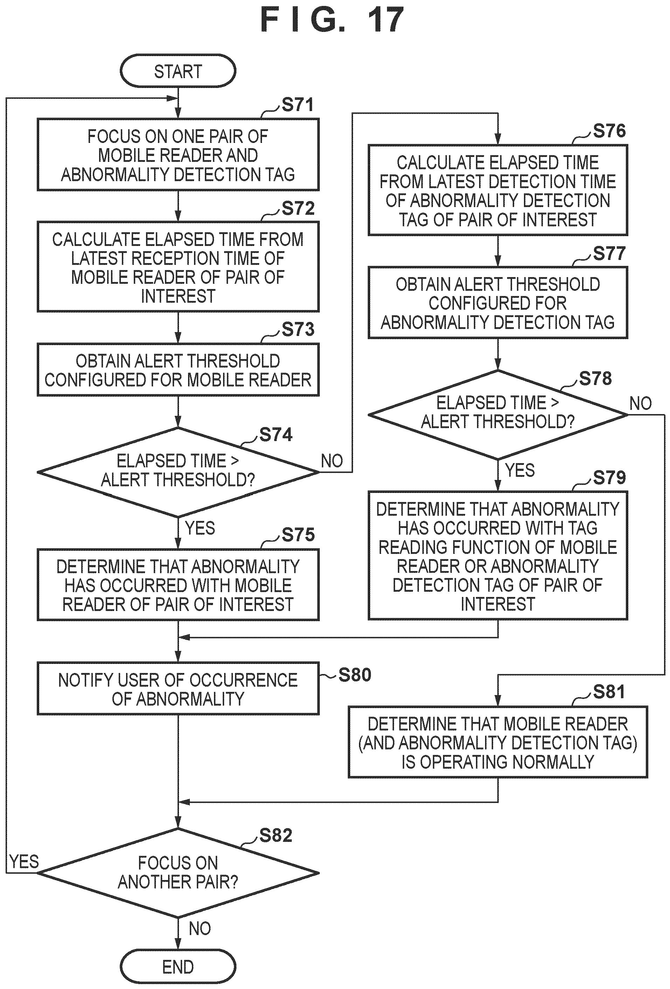

FIG. 17 is a flowchart illustrating an example of a flow of monitoring processing performed by the abnormality detection unit 334 of the management server 300 in the second modification example. Herein, it is assumed that a plurality of mobile readers 100 under management of the position management system 1 are subject to monitoring.

First, in S71, the abnormality detection unit 334 focuses on a pair of one mobile reader 100 and an abnormality detection tag that is collocated with the mobile reader 100. In S72, the abnormality detection unit 334 refers to the reader monitoring table 360 and calculates elapsed time from the last reception time of the mobile reader 100 of the pair of interest. Next, in S73, the abnormality detection unit 334 obtains the alert threshold configured for the mobile reader 100. Then, in S74, the abnormality detection unit 334 determines whether the calculated elapsed time exceeds the alert threshold or not. Herein, in a case where the elapsed time exceeds the alert threshold, the processing proceeds to S75. Meanwhile, in a case where the elapsed time does not exceed the alert threshold, the processing proceeds to S76.

In S75, the abnormality detection unit 334 determines that an abnormality has occurred at the mobile reader 100 because the elapsed time from the last reception time exceeds the alert threshold for the mobile reader 100 of the pair of interest. Then, the processing proceeds to S80.

On the other hand, in S76, the abnormality detection unit 334 refers to the tag monitoring table 350 and calculates elapsed time from the last detection time of the abnormality detection tag of the pair of interest. Next, in S77, the abnormality detection unit 334 obtains the alert threshold configured for the abnormality detection tag. Then, in S78, the abnormality detection unit 334 determines whether the calculated elapsed time exceeds the alert threshold or not. Herein, in a case where the elapsed time does not exceed the alert threshold, the processing proceeds to S81. Meanwhile, in a case where the elapsed time exceeds the alert threshold, the processing proceeds to S79.

In S79, the abnormality detection unit 334 determines that an abnormality has occurred at the tag reading function of the mobile reader 100 or the abnormality detection tag because the abnormality detection tag has not been detected though periodic data reception from the mobile reader 100 of the pair of interest continues. Then, the processing proceeds to S80.

In S80, the abnormality detection unit 334 notifies a user of occurrence of the abnormality related to the abnormality detection tag.

On the other hand, in S81, the abnormality detection unit 334 determines that the mobile reader 100 (and the abnormality detection tag) is operating properly because the abnormality detection tag has been continuously detected and periodic data reception from the mobile reader 100 is also continuing.

In S82, the abnormality detection unit 334 determines whether there remains another pair to be focused on. In a case where there remains another pair to be focused on, the processing goes back to S71, and the above-described processing is repeated for the remaining pair. In a case where there remains no other pair to be focused on, the monitoring processing in FIG. 17 ends.

Such monitoring processing may be performed regularly during a period when the mobile reader 100 operates.

<7. Summary>

Various embodiments, practical examples and modification examples of the technology according to the present disclosure have been described in detail using FIGS. 1 to 17. In the above-described embodiments, a first wireless device (paired position tag/abnormality detection tag) is paired with a first reading apparatus (fixed reader/mobile reader), and a second wireless device (target tag) is attached to a management target that is movable. When second identification information is read from the second wireless device by the first reading apparatus, a position of the management target is estimated based on a result of reading the second identification information. Further, an abnormality related to the first wireless device is detected based on a result of an attempt by the first reading apparatus to read first identification information from the first wireless device. As the first wireless device is installed within a reading range of the first reading apparatus, failure in reading information from the first wireless device means that a certain abnormality related to the first wireless device has occurred. In this manner, it is possible to appropriately distinguish normal non-detection of the management target from abnormalities of an RFID tag and a tag reader that serve as an infrastructure for position estimation, thereby achieving easier abnormality detection and preventing reliability of position information from reducing.

In the above-described embodiments, at least one of the first reading apparatus (fixed reader) and the first wireless device (paired position tag) may be installed at known first point in the real space, and a position of the management target may be estimated further based on positional coordinates of the first point. In this case, it is possible to easily detect an abnormality such as damage or removal of a position tag introduced as the infrastructure for position estimation, and to prompt a user to take an action such as checking an installation status of the position tag or replacing the tag.

In the above-described embodiments, a third wireless device (non-paired position tag) that is not paired with a fixed reader may be installed at known second point in the real space. When third identification information is read from the third wireless device and the second identification information is read from the second wireless device by the second reading apparatus (mobile reader), a position of the management target is estimated based at least on position information of the second point. In this manner, by making it possible to also estimate a position based on information read from the third wireless device that is not paired with a fixed reader, an area in which position estimation is possible can be extended while suppressing an increase in costs resulting from an increase in the number of fixed readers installed.

In the above-described embodiments, it may be determined that an abnormality has occurred at the first wireless device when the first reading apparatus has not read the first identification information from the first wireless device for a preset first time length. Alternatively, it may be determined that an abnormality has occurred at the third wireless device when no reading apparatus has read the third identification information from the third wireless device for a preset second time length. In this manner, threshold comparison of elapsed time from the last detection time of each wireless device to determine whether there is an abnormality or not allows for detecting occurrence of an abnormality in a timely manner to prompt a user to take a quick action.

In the above-described embodiments, it is determined that an abnormality has occurred at the first reading apparatus when no data has been received from the first reading apparatus for a preset third time length. In this manner, by combining abnormality detection based on status monitoring on the first reading apparatus with the abnormality detection based on the elapsed time from the last detection time of the first wireless device, it is possible to appropriately isolate a cause of an abnormality related to the first wireless device.

In a modification example, the first wireless device (abnormality detection tag) is collocated with the first reading apparatus (mobile reader), and the first reading apparatus and the first wireless device are movable. In this case, an abnormality of the mobile reader that moves while being carried by a user can be easily detected at the server side, and it is possible to prompt the user to take an action such as repairing or replacing the mobile reader, for example.

<8. Other Embodiments>

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A position management system (1) for managing a position of a management target that is movable in a real space, comprising:

   a first reading apparatus (110) that is capable of reading, from a wireless device, identification information stored in the wireless device;
   a first wireless device (40) that stores specific first identification information;
   a second wireless device (50) that is attached to the management target and stores second identification information for identifying the management target;
   wherein the first wireless device is installed within a reading range of the first reading apparatus, and
   wherein the position management system includes:

      an estimation means (332) configured to, when the second identification information is read from the second wireless device by the first reading apparatus, estimate a position of the management target based on a result of reading the second identification information, and
      an abnormality detection means (334) configured to detect an abnormality related to the first wireless device based on a result of an attempt by the first reading apparatus to read the first identification information from the first wireless device.

2. The position management system (1) according to claim 1, wherein at least one of the first reading apparatus and the first wireless device is installed at a known first point in the real space.

3. The position management system (1) according to claim 2, wherein the estimation means is configured to estimate, when the first identification information is read from the first wireless device and the second identification information is read from the second wireless device, a position of the management target based on a result of reading the second identification information and positional coordinates of the first point.

4. The position management system (1) according to claim 3, wherein the position management system further comprises:

   a third wireless device (45) installed at a known second point in the real space and storing specific third identification information,
   wherein the estimation means is configured to, when the third identification information is read from the third wireless device and the second identification information is read from the second wireless device by a movable second reading apparatus, estimate a position of the management target based on a result of reading the second identification information and position information of the second point.

5. The position management system (1) according to claim 4, wherein the abnormality detection means is configured to determine that an abnormality related to the first wireless device has occurred when the result of the attempt to read by the first reading apparatus indicates that the first identification information has not been read from the first wireless device by the first reading apparatus for a preset first time length.

6. The position management system (1) according to claim 5, wherein the abnormality detection means is configured to determine that an abnormality related to the third wireless device has occurred when a reading result indicating that the third identification information has been read from the third wireless device has not been received from any reading apparatus for a preset second time length.

7. The position management system (1) according to claim 6, wherein the second time length is longer than the first time length.

8. The position management system (1) according to claim 6 or 7, wherein the first time length and the second time length are individually configurable for each wireless device.

9. The position management system (1) according to any one of claims 1 to 8, wherein the first wireless device is collocated with the first reading apparatus, and
the first reading apparatus and the first wireless device are movable.

10. The position management system (1) according to any one of claims 1 to 9, wherein the abnormality detection means is configured to determine that an abnormality has occurred at the first reading apparatus when no data has been received from the first reading apparatus for a preset third time length.

11. The position management system (1) according to any one of claims 1 to 10, wherein the abnormality detection means is configured to determine that an abnormality has occurred at the first reading apparatus when i) the result of the attempt to read by the first reading apparatus indicates that the first identification information has not been read from the first wireless device by the first reading apparatus during a time period and ii) a result of an attempt to read by a second reading apparatus (100) that is different from the first reading apparatus indicates that the first identification information has been read from the first wireless device by the second reading apparatus during the time period.

12. The position management system (1) according to any one of claims 1 to 11, wherein the abnormality detection means is configured to notify a user of occurrence of the abnormality upon detecting the abnormality.

13. The position management system (1) according to claim 12, wherein the abnormality detection means is configured to provide the user with position information related to a position at which the abnormality has detected on a screen (600) displayed by a display apparatus.

14. The position management system (1) according to any one of claims 1 to 13, wherein the position management system comprises a server apparatus that includes:

a communication means configured to communicate with the first reading apparatus; and
the abnormality detection means.

15. A method performed in a position management system (1), wherein the position management system includes:

a first reading apparatus (110) that is capable of reading, from a wireless device, identification information stored in the wireless device;
a first wireless device (40) that stores specific first identification information;
a second wireless device (50) that is attached to a management target and stores second identification information for identifying the management target;
wherein the first wireless device is installed within a reading range of the first reading apparatus, and
the method comprises:

when the first reading apparatus has read the second identification information from the second wireless device, estimating (S25) a position of the management target based on a result of reading the second identification information;
attempting (S11), by the first reading apparatus, to read the first identification information from the first wireless devices; and
detecting (S46, S58, S60) an abnormality related to the first wireless device based on a result of the attempt by the first reading apparatus to read the first identification information.

16. An information processing apparatus (300) for use in a position management system (1), wherein the position management system includes:

a first reading apparatus (110) that is capable of reading, from a wireless device, identification information stored in the wireless device;
a first wireless device (40) that stores specific first identification information;
a second wireless device (50) that is attached to a management target and stores second identification information for identifying the management target;
wherein the first wireless device is installed within a reading range of the first reading apparatus, and
the information processing apparatus comprises:

an estimation means (332) configured to, when the second identification information is read from the second wireless device by the first reading apparatus, estimate a position of the management target based on a result of reading the second identification information, and
an abnormality detection means (334) configured to detect an abnormality related to the first wireless device based on a result of an attempt by the first reading apparatus to read the first identification information from the first wireless device.

# F I G. 1A

# FIG. 1B

# FIG. 2

100, 110

READING APPARATUS

OPERATION UNIT ~115

STORAGE UNIT ~112

116

COMMUNICATION UNIT 113

CONTROL UNIT 111

RF CONTROLLER 120

MEASURING UNIT ~114

TX

RX

CARRIER_CANCEL

RF_DETECT

POWER AMPLIFIER 121

FILTER 122

POWER DETECTOR 126

COUPLER 123

CANCELER 127

COUPLER 124

ANTENNA 125

READING UNIT

# F I G. 3

200

OPERATION
UNIT
215

STORAGE
UNIT
212

DISPLAY
UNIT
221

COMMUNICATION
UNIT
213

CONTROL
UNIT
211

AUDIO
OUTPUT UNIT
222

TERMINAL APPARATUS

# FIG. 4

MANAGEMENT SERVER (300)

COMMUNICATION UNIT (310)

CONTROL UNIT (330)
- DATA MANAGEMENT UNIT (331)
- ESTIMATION UNIT (332)
- INFORMATION PROVISION UNIT (333)
- ABNORMALITY DETECTION UNIT (334)

POSITION INFORMATION DB (320)
- TARGET TABLE (321)
- SECTION TABLE (322)
- POSITION TAG TABLE (323)
- READER TABLE (324)
- TAG DETECTION TABLE (325)

MONITORING DB (340)
- TAG MONITORING TABLE (350)
- READER MONITORING TABLE (360)

EP 4 571 345 A1

# FIG. 5

# F I G. 6

**INFORMATION BROWSING** — 600

BLDG. [ RESEARCH FLOOR ▽ ] — 601   FLOOR : [ 1F ▽ ] — 602

603 ▽  604 ⚙  605 ⋮

620

621 — ▼ 1ST FLOOR
622 — ▼ SECTION A
ITEM A
:
622 — ▶ SECTION B
622 — ▶ SECTION C
622 — ▼ SECTION D
ITEM D
:
622 — ▶ SECTION E
622 — ▶ SECTION F
622 — ▶ SECTION G

610

ROOM No.101   ROOM No.102   ROOM No.103

611   [1] [0]   [2] [0]   [0] [0]   [2] [1]

EP 4 571 345 A1

# FIG. 7

# F I G. 8

350

| POSITION TAG ID | RELATED READER | LATEST DETECTION TIME | DETECTING READER | ELAPSED TIME | ALERT THRESHOLD | |
|---|---|---|---|---|---|---|
| TG01 | RD01 | 10/15 8:00:10 | RD01 | 5 min. | 15 min. | |
| TG02 | RD02 | 10/14 20:00:00 | RD02 | 12 hours | 15 min. | → ABNORMAL |
| TG03 | RD03 | 10/15 8:00:11 | RD03 | 5 min. | 15 min. | |
| TG04 | RD04 | 10/15 8:00:12 | RD04 | 5 min. | 15 min. | |
| TG11 | – | 10/15 7:30:00 | RD01 | 30 mn. | 1 week | |
| TG12 | – | 10/7 6:50:30 | RD11 | 8 days | 1 week | → ABNORMAL |
| ⋮ | ⋮ | ⋮ | ⋮ | ⋮ | ⋮ | |

351 352 353 354 355 356

EP 4 571 345 A1

# FIG. 9

EP 4 571 345 A1

| READER ID | LATEST RECEPTION TIME | ELAPSED TIME | ALERT THRESHOLD |
|-----------|----------------------|--------------|-----------------|
| RD01 | 10/15 8:00:10 | 5 min. | 30 min. |
| RD02 | 10/15 8:00:13 | 5 min. | 30 min. |
| RD03 | 10/15 8:00:11 | 5 min. | 30 min. |
| RD04 | 10/15 8:00:12 | 5 min. | 30 min. |
| : | : | : | : |
| RD07 | 10/14 16:00:14 | 16 hours | 30 min. | → ABNORMAL |
| : | : | : | : |

361  362  363  364

360

# FIG. 10

**INFORMATION BROWSING** — 600

BLDG. [ RESEARCH FLOOR ▽ ] — 601   FLOOR : [ 1F ▽ ] — 602   [ PER GRID ] — 706

603 [▽]  604 [⚙]  605 [⋮]

620 —

| ▼ 1ST FLOOR |
| ▼ SECTION A |
| ITEM A |
| : |
| ⚠ SECTION B |
| ▶ SECTION C |
| ▼ SECTION D |
| ITEM D |
| : |
| ▶ SECTION E |
| ▶ SECTION F |
| ▶ SECTION G |

711 — [▢ [0] / ◠ [0]]
711 — [▢ [1] / ◠ [0]]
711 — [▢ [1] / ◠ [0]]

610 — ROOM No.102
711 — [▢ [0] / ◠ [0]]

ROOM
711 — [▢ [1] / ◠ [0]]

750 — [⚠ TAG ERROR]

711 — [▢ [2] / ◠ [1]]

EP 4 571 345 A1

# F I G. 11A

START

ATTEMPT READING OF TAG ID — S11

S12

TAG DETECTED? — NO

YES

S18
OBTAIN CURRENT TIME (READING TIME)

S16
OBTAIN CURRENT TIME

S19
TRANSMIT READING RESULT DATA INCLUDING READ TAG ID TO SERVER

S17
TRANSMIT COMMUNICATION DATA TO SERVER

# F I G. 11B

START

ATTEMPT READING OF TAG ID — S11

S12

TAG DETECTED? — NO

YES

S13
MEASURE RELATIVE AMOUNT OF MOVEMENT

S14
OBTAIN CURRENT TIME (MEASUREMENT TIME)

S18
OBTAIN CURRENT TIME (READING TIME)

S19
TRANSMIT READING RESULT DATA INCLUDING READ TAG ID TO SERVER

S15
TRANSMIT MEASUREMENT RESULT DATA INCLUDING RELATIVE AMOUNT OF MOVEMENT TO SERVER

# F I G. 12

START

OBTAIN READING RESULT RECORD FOR MANAGEMENT TARGET — S21

EXTRACT READING RESULT RECORD(S) FOR
POSITION TAG(S) RECEIVED FROM SAME TAG READER — S22

SELECT REFERENCE POSITION TAG — S23

CALCULATE RELATIVE AMOUNT OF MOVEMENT OF TAG READER
BETWEEN READING TIMES OF TWO RFID TAGS — S24

ESTIMATE LOCATED POSITION OF MANAGEMENT TARGET
BASED ON CALCULATED RELATIVE AMOUNT OF MOVEMENT
AND KNOWN POSITION OF REFERENCE POSITION TAG — S25

ESTIMATE THAT MANAGEMENT TARGET IS LOCATED
IN SECTION ASSOCIATED WITH REFERENCE POSITION TAG — S26

UPDATE DATABASE BASED ON ESTIMATION RESULT — S27

END

# F I G. 13

```
                    ┌─────────────┐
                    │    START    │
                    └─────────────┘
                           │
                           ▼
┌──────────────────────────────────────────────────────┐
│ OBTAIN POSITION INFORMATION OF MANAGEMENT TARGET(S)    │～S31
│ THAT MATCHES FILTERING CONDITION(S)                    │
└──────────────────────────────────────────────────────┘
                           │
                           ▼
┌──────────────────────────────────────────────────────┐
│              OBTAIN MAP IMAGE DATA                     │～S32
└──────────────────────────────────────────────────────┘
                           │
                           ▼
┌──────────────────────────────────────────────────────┐
│          SET PLURALITY OF COORDINATE REGIONS          │～S33
└──────────────────────────────────────────────────────┘
                           │
                           ▼
┌──────────────────────────────────────────────────────┐
│         GENERATE LOCATED SECTION INFORMATION          │～S34
└──────────────────────────────────────────────────────┘
                           │
                           ▼
┌──────────────────────────────────────────────────────┐
│        GENERATE COORDINATE REGION INFORMATION         │～S35
└──────────────────────────────────────────────────────┘
                           │
                           ▼
┌──────────────────────────────────────────────────────┐
│        DISPLAY GENERATED INFORMATION ON SCREEN        │～S36
└──────────────────────────────────────────────────────┘
                           │
                           ▼
                    ┌─────────────┐
                    │     END     │
                    └─────────────┘
```

# FIG. 14

START

S41
FOCUS ON ONE FIXED READER

S42
CALCULATE ELAPSED TIME
FROM LATEST RECEPTION TIME
OF FIXED READER OF INTEREST

S43
OBTAIN ALERT THRESHOLD
CONFIGURED FOR FIXED
READER OF INTEREST

S44
ELAPSED TIME >
ALERT THRESHOLD?

YES

S46
DETERMINE THAT ABNORMALITY
HAS OCCURRED WITH
FIXED READER OF INTEREST

S47
NOTIFY USER OF OCCURRENCE
OF ABNORMALITY

NO

S45
DETERMINE THAT FIXED
READER OF INTEREST IS
OPERATING NORMALLY

S48
FOCUS ON
ANOTHER FIXED
READER?

YES

NO

END

# F I G. 15

```
                    START

S51
FOCUS ON ONE POSITION TAG

S52
CALCULATE ELAPSED TIME
FROM LATEST DETECTION TIME
OF POSITION TAG OF INTEREST

S53
OBTAIN ALERT THRESHOLD
CONFIGURED FOR POSITION
TAG OF INTEREST

S54
ELAPSED TIME >        YES
ALERT THRESHOLD?

NO

S55
DETERMINE THAT POSITION
TAG OF INTEREST IS
OPERATING NORMALLY

S56
NO
PAIRED POSITION TAG?

YES

S57
ANY ABNORMALITY           YES
WITH CORRESPONDING
FIXED READER?

NO

S58
DETERMINE THAT ABNORMALITY
HAS OCCURRED WITH
POSITION TAG OF INTEREST

S59
NOTIFY USER OF OCCURRENCE
OF ABNORMALITY

S60
DETERMINE THAT ABNORMALITY
IS LIKELY TO HAVE OCCURRED
WITH PAIRED POSITION TAG

S61
YES
FOCUS ON
ANOTHER POSITION
TAG?

NO

END
```

# F I G. 16

# F I G. 17

START

FOCUS ON ONE PAIR OF
MOBILE READER AND
ABNORMALITY DETECTION TAG — S71

CALCULATE ELAPSED TIME FROM
LATEST RECEPTION TIME OF
MOBILE READER OF PAIR OF
INTEREST — S72

OBTAIN ALERT THRESHOLD
CONFIGURED FOR MOBILE READER — S73

ELAPSED TIME >
ALERT THRESHOLD? — S74  NO

YES

DETERMINE THAT ABNORMALITY
HAS OCCURRED WITH MOBILE
READER OF PAIR OF INTEREST — S75

CALCULATE ELAPSED TIME
FROM LATEST DETECTION TIME
OF ABNORMALITY DETECTION
TAG OF PAIR OF INTEREST — S76

OBTAIN ALERT THRESHOLD
CONFIGURED FOR
ABNORMALITY DETECTION TAG — S77

ELAPSED TIME >
ALERT THRESHOLD? — S78  NO

YES — S79

DETERMINE THAT ABNORMALITY
HAS OCCURRED WITH TAG
READING FUNCTION OF MOBILE
READER OR ABNORMALITY
DETECTION TAG OF PAIR OF
INTEREST

NOTIFY USER OF OCCURRENCE
OF ABNORMALITY — S80

DETERMINE THAT MOBILE READER
(AND ABNORMALITY DETECTION TAG)
IS OPERATING NORMALLY — S81

FOCUS ON
ANOTHER PAIR? — S82

YES

NO

END

Europäisches
Patentamt

European
Patent Office

Office européen
des brevets

**EUROPEAN SEARCH REPORT**

Application Number

EP 24 21 7985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/215422 A1 (CANON KK [JP]) 13 October 2022 (2022-10-13) * paragraph [0042] - paragraph [0061] * * paragraph [0076] - paragraph [0097] * * paragraph [0134] - paragraph [0140] * * figures 1-20 * * abstract * & US 2024/013012 A1 (UEHARA TOMOYA [JP]) 11 January 2024 (2024-01-11) * the whole document * | 1-16 | INV. G01S1/68 G01S5/02 G01S13/76 G06K7/10 G06Q10/0833 |
| A | US 2010/201520 A1 (STERN MIKLOS [US] ET AL) 12 August 2010 (2010-08-12) * the whole document * | 1-16 | |
| A | US 2019/220715 A1 (PARK JUN SEOK [US] ET AL) 18 July 2019 (2019-07-18) * the whole document * | 1-16 | |

TECHNICAL FIELDS
SEARCHED (IPC)

G01S
G06Q
G06K

The present search report has been drawn up for all claims

| Place of search | Date of completion of the search | Examiner |
|---|---|---|
| Munich | 17 April 2025 | Galmiche, Aurélien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 7985

This annex lists the patent family members relating to the patent documents cited in  the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | | Publication date |
|---|---|---|---|---|
| WO 2022215422 A1 | 13-10-2022 | JP | 2022161340 A | 21-10-2022 |
| | | US | 2024013012 A1 | 11-01-2024 |
| | | WO | 2022215422 A1 | 13-10-2022 |
| US 2010201520 A1 | 12-08-2010 | US | 2010201520 A1 | 12-08-2010 |
| | | US | 2012092134 A1 | 19-04-2012 |
| | | WO | 2010093591 A1 | 19-08-2010 |
| US 2019220715 A1 | 18-07-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020129312 A

- JP 2021141415 A